(19) **Europäisches Patentamt**
**European Patent Office**
**Office européen des brevets**

(11) **EP 3 213 462 B1**

(12) **EUROPEAN PATENT SPECIFICATION**

(45) Date of publication and mention
of the grant of the patent:
**02.12.2020 Bulletin 2020/49**

(21) Application number: **15781910.3**

(22) Date of filing: **15.10.2015**

(51) Int Cl.:
***H04L 12/24*** *(2006.01)*      ***H04L 12/26*** *(2006.01)*

(86) International application number:
**PCT/EP2015/073925**

(87) International publication number:
**WO 2016/066438 (06.05.2016 Gazette 2016/18)**

(54) **NETWORK MANAGEMENT USING ADAPTIVE POLICY**

NETZWERKVERWALTUNG UNTER VERWENDUNG VON ADAPTIVEN RICHTLINIEN

GESTION DE RÉSEAU AU MOYEN D'UNE POLITIQUE ADAPTATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2014 US 201462073702 P**

(43) Date of publication of application:
**06.09.2017 Bulletin 2017/36**

(73) Proprietor: **Telefonaktiebolaget LM Ericsson
(publ)
164 83 Stockholm (SE)**

(72) Inventors:
• **VAN DER MEER, Sven
Westmeath
Athlone (IE)**
• **KEENEY, John
Westmeath
Athlon (IE)**

• **FALLON, Liam
Westmeath
Athlone (IE)**

(74) Representative: **Brann AB
P.O. Box 3690
Drottninggatan 27
103 59 Stockholm (SE)**

(56) References cited:
**US-A1- 2003 014 644      US-A1- 2006 048 142
US-A1- 2014 283 030**

• **BIN ZHANG ET AL: "Survey of Network
Management Protocols in Wireless Sensor
Network", E-BUSINESS AND INFORMATION
SYSTEM SECURITY, 2009. EBISS '09.
INTERNATIONAL CONFERENCE ON, IEEE,
PISCATAWAY, NJ, USA, 23 May 2009
(2009-05-23), pages 1-5, XP031481933, ISBN:
978-1-4244-2909-7**

**Description**

Technical Field

The present invention relates to management of communications networks, in general, and in particular to management of communications networks using adaptive policy.

Background

In operating systems, a policy is essentially an artefact of control for mechanisms provided by the operating system. An interesting example for the use of policies in this context is disclosed in a publication by Jomier (1981) in which static and dynamic policies for memory allocation in a paged system have been introduced. Both policies are based on networks of queues, but the consequences of applying them differ significantly. Thus, the application of a policy changes the behaviour of the governed, underlying system.

Policies appeared in communication networks in the late 1970s, mostly for the management of quality of service. Two examples are Rouse & Rouse (1979) and Kamoun (1981). Rouse & Rouse applied policies to interconnected library networks. Here, a policy is a "set of rules that specifies the ways in which members of the network communicate in terms of sharing resources". The paper then describes a policy analysis model for sharing resources comprising the probability of a request in gaining access to a resource, average request waiting time and average request cost. Kamoun focuses on the application of policies for network flow control, i.e. to detect and later prevent network congestion. Aspects such as end-to-end control, resource reservations strategies and dropping techniques have been already state of the art in Kamoun's work and policies being used in this area for quite some time. The examples described in the paper are basically IF/THEN constructs, where the IF condition can be a relatively complex statement resulting in a Boolean value and the THEN action defines what should happen next:

| | |
|---|---|
| IF M = B | - Drop the arrived packet |
| IF M < L | - Accept the arrived packet |
| IF M = B or $n_i = z_i$ | - Drop the arrived packet |
| IF $n_i < l_i$ | - Accept the arrived packet |

Policy systems, frameworks and models differ in the terminology they use. However, IETF RFC 3198 provides a terminology that is still widely used as a reference when comparing different policy approaches. In this document, the following important definitions are made:

| | |
|---|---|
| Policy: | Policy is a set of rules that are used to manage and control the changing and/or maintaining of the state of one or more managed objects. |
| Policy Rule: | A Policy Rule is an intelligent container. It contains data that define how the Policy Rule is used in a managed environment as well as a specification of behaviour that dictates how managed entities that it applies to will interact. |
| Policy Group: | A Policy Group is a container that can aggregate Policy Rule and/or Policy Group objects. |
| Policy Condition: | A Policy Condition is represented as a Boolean expression and defines the necessary state and/or prerequisites that define whether the actions aggregated by the Policy Rule should be performed. |
| Policy Action: | A Policy Action represents the necessary actions that should be performed if the Policy Condition clause evaluates to TRUE. |
| Policy Event: | A Policy Event represents an occurrence of a specific event of interest to that managed system and can be used to trigger the evaluation of a Policy Rule. |

In general terms, a policy is typically described as a principle or rule that guides decisions and helps to achieve rational outcome. Policies are specified, instantiated and enforced. This process of using policies can be described as follows:

- The *specification* of a policy provides a formal definition for each part of the rule and a description of the effects of the policy.
- The *instantiation* is the process of taking a policy specification and enable its enforcement.
- The *enforcement* ensures that instantiated policies are followed.

Consider a large stadium scenario in which the environment (or context) of management changes. A policy manages resources around the large stadium. Most of the time, there is a normal traffic mix from people in the vicinity of the stadium. Normally, football matches are held at the stadium weekly. However, occasionally, the international team hold public training sessions at the stadium and concerts are held at the stadium once or twice each summer, causing the traffic characteristics in and around the stadium to change. More people use the network resources in the vicinity of the stadium to carry all sorts of services (such as voice call, SMS messaging, video to follow the event, live streaming to stream the event home). With static policies it is difficult and complex to define event and condition specifications to distinguish between these three different possible situations.

There may be another scenario where a policy goal is defined to maintain an equilibrium for a given traffic mix across a Radio Access Network (RAN), an evolved Packet Core (EPC) and transport network. This policy adjusts RAN nodes, packet and service gateways and routing parameters to maintain an optimum usage of resources for a mixed set of services such as voice, video streaming and HTTP traffic. In a situation of an emergency, the goal of the policy is changed to prioritize voice calls from certain users towards the emergency centre (and among certain selected users) as well as SMS services for the same user group. Here, the policy will reconfigure RAN nodes (to only allow access to selected users), packet and service gateway (to ignore any traffic but voice and SMS) and routing in the core network, accordingly. Using traditional policy implementation methods, one must deactivate the old (equilibrium) policies and activate a new set of policies for the emergency situation.

Other documents describing using policies in network management are identified in the References section at the end of this document. However, devices and operations as in the solution to be described in this document are neither disclosed nor suggested in these documents.

The known solutions have some serious drawbacks. They can carry out only static evaluation because the policy logic is fixed at design time and cannot be altered or selected at run time. These existing solutions require extensive authoring because all logic must fit into this single approach to problem solving. At the same time the events to match, the conditions to evaluate, and the action to perform, must all be defined at the same time (i.e. authoring stage), which makes the authoring even more complex, time consuming and error-prone.

There is known a document related to policy chaining, namely US2006/048142A1. However, devices and operations as in the invention now to be described are neither disclosed nor suggested in this document.


Summary

Accordingly, the invention seeks to preferably mitigate, alleviate or eliminate one or more of the disadvantages mentioned above singly or in any combination.

According to a first aspect of the present invention there is provided a method of network management using an adaptive policy in which the adaptive policy is defined by a plurality of sets of tasks. The method comprises receiving a trigger event and obtaining information representative of at least one context in which the network operates. The method also comprises performing a first task from a first set of tasks, wherein the first task is selected based on the trigger event and the information representative of the at least one context in which the network operates and then performing a subsequent task from a subsequent set of tasks. The subsequent task is selected based on an output produced by performing a preceding task and the information representative of the at least one context in which the network operates. The act of performing the subsequent task is repeated until a task from a final set of tasks is selected and performed. The method further comprises producing an action event by performing the task selected from the final set of tasks and forwarding for execution, the action event.

According to a second aspect of the present invention there is provided a network management system node. The network management system node comprises a processor and a memory. Said memory contains instructions executable by said processor, whereby said network management system node is operative to use an adaptive policy, wherein the adaptive policy is defined by a plurality of sets of tasks. Said network management system node is further operative to receive a trigger event and to obtain information representative of at least one context in which the network operates. The network management system node is also operative to perform a first task from a first set of tasks, wherein the first task is selected based on the trigger event and the information representative of the at least one context in which the network operates and then to perform a subsequent task from a subsequent set of tasks. The subsequent task is selected based on an output produced by performing a preceding task and the information representative of the at least one context in which the network operates. The network management system node is further operative to repeat the act of performing the subsequent task until a task from a final set of tasks is selected and performed and to produce an action event by performing the task selected from the final set of tasks and to forward for execution, the action event.

According to a third aspect of the present invention there is provided a communications network comprising a network management system node as defined above.

Further features of the present invention are as claimed in the dependent claims.

The present invention provides the benefit of dynamically adapting to changes in goals, its environment, and in incoming event context. Policy logic (tasks) and policies can be incrementally developed using agile approaches, as policies can be evolved from simple implementations to more complex implementations as their deployments mature. This means that policies can be created as an aggregation of existing tasks, or specialisations of existing tasks, so existing logical elements can be reused and specialised. Policy design in this method is highly suited to tooling using an approach such as, for example, XML-based toolsets and modelling environments such as those, for example, in Eclipse because policies are specified using a Domain Specific Language and the context on which tasks and policies operate is modelled using metadata. Additionally the solution in its embodiments is highly scalable; multiple instances of the same policy can run and can share the load of incoming events of a particular class.

Brief description of the drawings

The present invention will be understood and appreciated more fully from the following detailed description taken in conjunction with the drawings in which:

FIG. 1A - Fig 2 show flowcharts illustrating a method of network management in various embodiments of the present invention;

FIG. 3 is a diagram illustrating a network management system node in one embodiment of the present invention;

FIG. 4 and 5 show diagrams illustrating architectures of network management system node in embodiments of the present invention;

FIG. 6 is shows arrangement of context information in an adaptive policy Knowledge Base in one embodiment of the present invention;

FIG. 7 shows a diagram illustrating a state machine of the network management system node in one embodiment of the present invention;

FIG. 8 shows a diagram illustrating details of the architecture of the network management system node in one embodiment of the present invention;

FIG. 9 - 11 show flow charts illustrating further details of embodiments of the method of network management;

FIG. 12 shows one example of attributes of a task in an adaptive policy;

FIG. 13 shows a flowchart illustrating one embodiment of operations of creating an adaptive policy;

FIG. 14 shows one example of attributes of an adaptive policy as composed in the operations illustrated in FIG. 13;

FIG. 15, 17 - 21 show flow charts illustrating further details of embodiments of the method of network management;

FIG. 16 shows an example of attributes of an active state as composed in operations shown in FIG. 15;

FIG. 22 and FIG. 23 are diagrams illustrating a network management system node in two embodiments of the present invention;

FIG. 24 shows a communications network in one embodiment.

Detailed description

In the following description, for purposes of explanation and not limitation, specific details are set forth such as particular architectures, interfaces, techniques, etc. in order to provide a thorough understanding of the invention. In other instances, detailed descriptions of well-known devices, circuits, and methods are omitted so as not to obscure the description of the invention with unnecessary details.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification are not necessarily all referring to the same embodiment. Further, the particular features, structures or characteristics may be combined in any suitable manner in one or more embodiments.

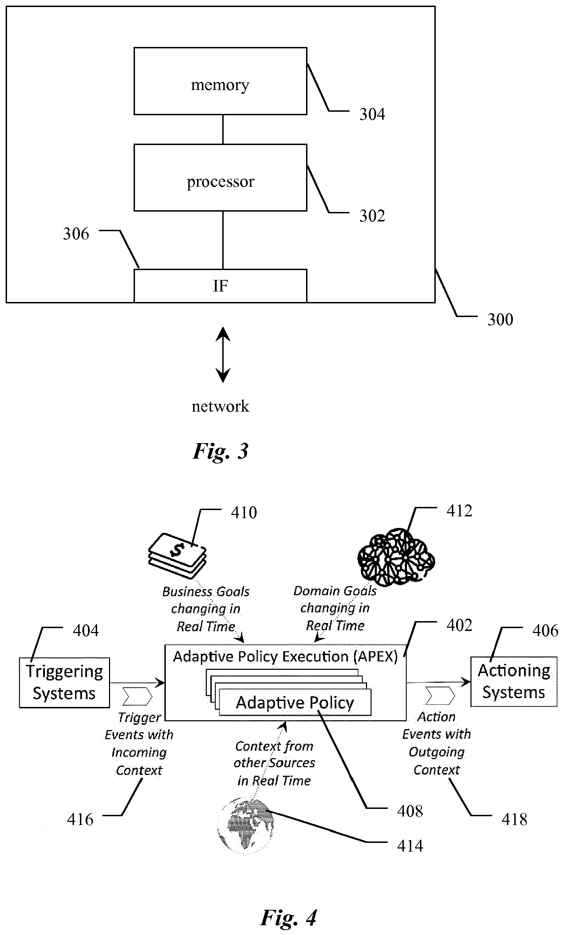

This document presents adaptive policies describing how they can be used in management of a communications network. As illustrated in Figure 4 an incoming event, 416, triggers an adaptive policy, 408, running in an Adaptive Policy Execution Environment (APEX), 402, which produces an action event, 418. This action event is passed on to an actioning system, 406, that carries out some action. The action taken by the adaptive policy, 408, on reception of an event can adapt in real time to changes in business, 410, or domain goals, 412, to changes in the environment or context, 414, in which the policy is running, and to differences in the incoming context of events.

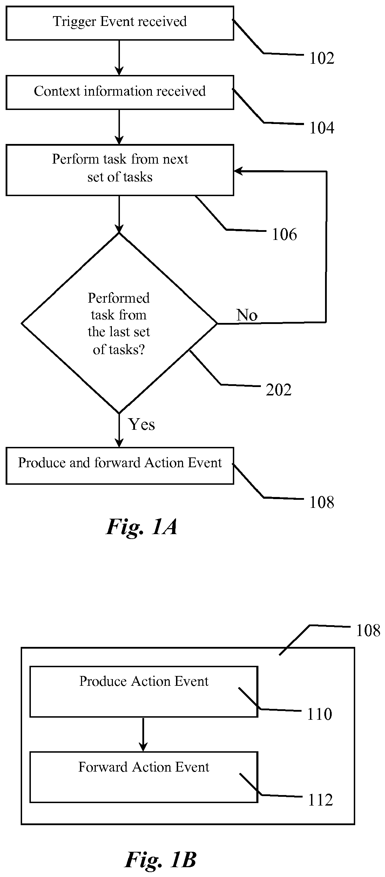

With reference to Figure 1A one embodiment of a method of network management using an adaptive policy is illustrated. The adaptive policy is defined by a plurality of sets of tasks and the method comprises receiving 102 a trigger event and obtaining, 104, information representative of at least one context in which the network operates. In one embodiment the context information is received together with the trigger event and in an alternative embodiment the context information may be received separately from receiving the trigger event. These two acts of receiving may be performed in any order or simultaneously. In yet another embodiment the context information may be downloaded by a network management system node operating in accordance with this method. As discussed above, in one embodiment, the information representative of at least one context may be received; however, in an alternative embodiment said information may be downloaded, wherein the downloading is an outcome of a request from the system/device that processes the trigger event.

In a preferred embodiment the incoming event also carries associated incoming context information which comprises information indicative of the reason for the trigger event. The reason that triggered the event may be a number of attached users, traffic volume increase, increase of dropped calls, decrease of quality of service, bit error rate increase, or another factor that may have influence on the operation of the communications network.

The method further comprises performing a first task, 106, from a first set of tasks, wherein the first task is selected based on the trigger event and information representative of at least one of the contexts in which the network operates. Then the method comprises performing a subsequent task, 202 - branch NO, from a subsequent set of tasks. The subsequent task is selected based on an output produced by performing a preceding task and information representative of at least one of the contexts in which the network operates. The act of performing a subsequent task is repeated until a task from a final set of tasks is selected and performed. This is illustrated in step 202 - branch YES. In other words, once the method performs the first task the method enters a loop of performing subsequent tasks and stays in this loop until a task from the final set of tasks is selected and performed.

The method comprises producing 108 an action event. The action event is produced by a task selected from the final set of tasks. The action event is forwarded for execution. The embodiment illustrated in Figure 1A shows producing and forwarding the action event as one operation 108. A person skilled in the art would understand that once the action event is produced it is forwarded for execution without delay.

The embodiment illustrated in Figure 1B, on the other hand, comprises the operations of producing, 110, the action event and forwarding, 112, said action event as two separate steps. This embodiment, on the other hand, illustrates a situation where a delay between producing and forwarding may be introduced.

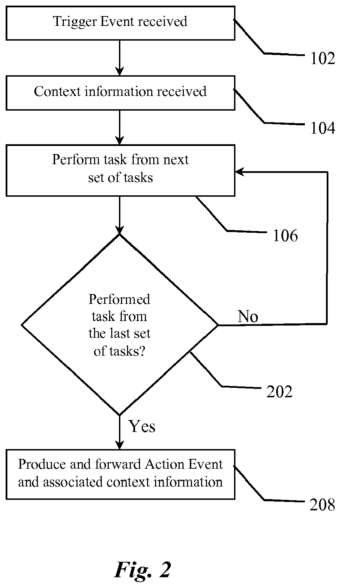

In another embodiment, as illustrated in Figure 2, steps 102 through to 202 are the same as in the embodiment illustrated in Figure 1A. In the embodiment shown in Figure 2 information representative of an outgoing context associated with the action event is produced and then forwarded together with the action event, 208. In this embodiment the method comprises producing the action event and information representative of an outgoing context associated with the action event by performing the task selected from the final set of tasks and forwarding with the action event the information representative of the outgoing context 208. Preferably outgoing context gives more information on the action event generated by a policy. For example, if a policy decides to send an SMS to a customer care system, the outgoing context may contain the message to send and the phone number to which to send the SMS. In an alternative embodiment the action event and the outgoing context may be forwarded separately.

Although in Figure 2 step 208 is illustrated as an operation comprising producing and forwarding it is envisaged that these acts (i.e. producing and forwarding), in an alternative embodiment, may be performed with some delay as discrete operations in a way similar to that illustrated in Figure 1B and described above.

The embodiments illustrated in Figure 1A and 1B allow for reduction of processing consumption in situations of very simple action events. In these situations the actioning system (i.e. the system/device that is meant to act upon receipt of the action event) is able to act correctly even without the information representative of the outgoing context. If this is the case, a system saves important network resources (processing and bandwidth) by not producing and not sending this outgoing context information.

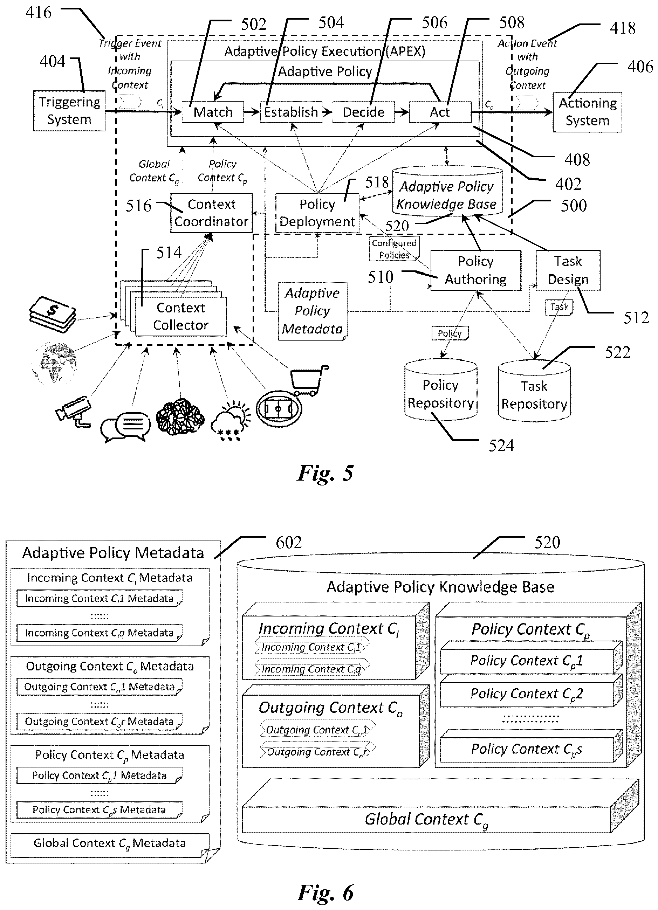

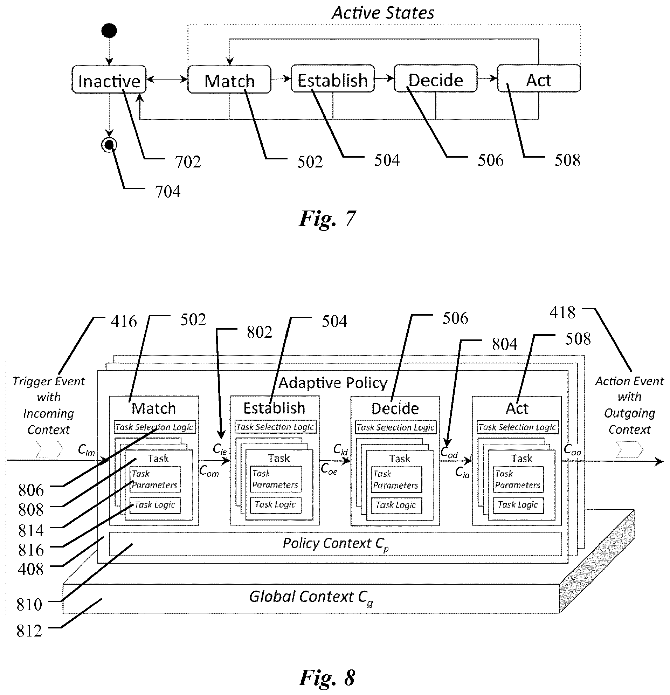

In a preferred embodiment an adaptive policy has four active states of execution, which is a variation of a well-known OODA loop (*Observe, Orient, Decide,* and *Act*) and is used to achieve separation of the orthogonal aspects of policy execution. In this preferred embodiment a MEDA loop (see Figure 5) is made up of a *Match, 502,* state which state understands the incoming event and its context, an *Establish, 504,* state which determines the situation that gave rise to the incoming event, a *Decide, 506,* state that resolves the correct course of action to take, and an *Act, 508.* state that determines the best way to realize that course of action. In this embodiment the step of performing a task comprises processing the trigger event and the information representative of at least one context in which the network operates by executing the series of states as discussed above and as illustrated in Figure 5 and Figure 7.

In a preferred embodiment the context in which the network operates may be divided into several more specific contexts. In consequence the information representative of a context in which the network operates may comprise information representative of a global context, a policy context or an incoming context. As mentioned above the information representative of the incoming context comprises information indicative of the reason for the trigger event. The information representative of the global context comprises information describing the environment in which at least part of the network operates. This information may include information about network topology, information on the state of metrics on network entities such as cells, base stations, and switches, information about power outages and even non-network information like for example weather conditions (as they may influence propagation of radio signals) or information about mass events (sport, concerts, etc). The information representative of the policy context in one embodiment comprises information describing how the trigger event should be handled depending on at least one of the global context and the incoming context. Policy context is information that is specific to a particular type of policy but is not specific to a single running instance of that policy. A good example might be a protocol analyser used by a policy for checking the type of traffic users are transmitting. There could be a limit on the number of sessions the protocol analyser could handle. Policy context would be used to keep track of how many sessions are being analysed by the protocol analyser, it can be used to control access to the protocol analyser and to decide how to deal with the situation where the protocol analyser runs out of capacity (block analysis of further sessions, stop analysing the oldest session etc).

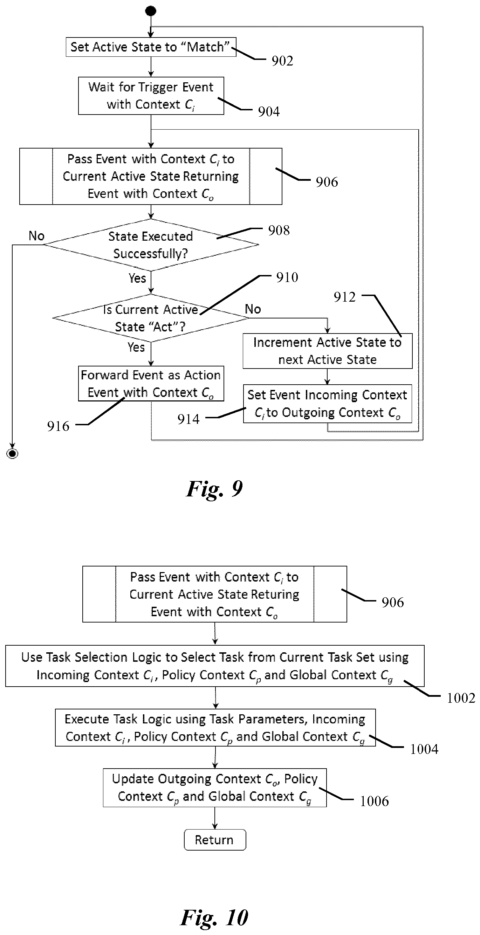

The MEDA loop differs from an OODA loop in a number of important ways. In contrast to an OODA loop, which uses direct feedback from *Decide* and *Act* back to *Observe,* the MEDA loop, on the other hand, uses global and policy context for feedback. Whilst an OODA loop uses business logic in its *Observe* state, the MEDA loop triggers based on its incoming context. The OODA *Orient* state orients itself using five aspects namely Cultural Traditions, Analysis & Synthesis, Previous Expectations, New Information, and Genetic Heritage. The MEDA's *Establish* state does not use these aspects but instead uses the Global and Policy context of the policy in which it is running. An OODA *Decide* state puts forward a hypothesis and its *Act* state tests that hypothesis. The MEDA *Decide* state makes a decision to change configuration and its *Act state* determines the best way to realize that decision without testing it. In the MEDA loop, D and A implicitly assume that decisions that can be made are tested at design time and are tested outside the MEDA policy and even outside by other systems. An OODA loop has implicit guidance and control as input for *Orient* and *Act,* whereas MEDA uses context as input for all states but does not require any implicit guidance to be set. Instead, guidance is made explicit as context so that the behaviour of policies can be analysed. Finally, unlike an OODA loop that has feedback from all states back to *Orient,* a MEDA loop goes through all states and then back to the *Match* state unless an error occurs, in which case it t drops from the current state back to Inactive and then to the Match state, see Figure 7 - the branches going down from the states or Figure 9, step 908 - "No". More detailed description of Figure 7 will follow. In the MEDA loop, context is used for feedback, with that feedback being handled as an information problem, not a state machine problem.

The policy logic (or task) executed in each state to handle a particular incoming event is adaptable and is selected from a number of possible policy logic definitions based on the business and domain goals of the policy, its environmental context and, of course, the context of the incoming event, all of which can change at run time.

Embodiments of the method described herein allow for adaptable and dynamic changes to policies at run time. Policies themselves, the goals of the policies, and the logic of existing policies running in an APEX can all be modified. The goal of a policy is the action that should be performed in a certain situation, in other words it is the action event the policy should produce. This can change depending on the situation in which the policy is running. For example, if a cell is not congested, it is OK to allow low priority users to watch high definition video, but in a congested situation, such traffic could be blocked.

The method uses a metadata approach for handling conflict identification and resolution. The context that each policy uses and modifies is modelled, allowing conflicts in a set of policies to be identified and resolved at policy deployment time. Further, interference and conflicts between policies can be monitored and mitigated in an APEX because interactions between policy instances and context can be traced. The advantage of using of metadata is that it allows policy instances to be added, modified and removed while the system is running. Unlike classic ECA (Event Condition Action) policies, its metadata approach to context enables conflict detection at a perstate of execution level and per task in the task repository.

In a preferred embodiment policies and their policy logic (also referred to in this document as tasks) are specified using a DSL (Domain Specific Language) using technologies such as XML. This means that policy design and deployment toolsets that support this method are easy to develop.

An adaptive policy is represented by policy logic or in other words as a series of tasks that need to be performed in order to produce a desired output (action event) in response to an input (trigger event). In a simple embodiment a simple policy may be represented by a single task.

The method is easy to scale. In one embodiment the goals and context in which policies are executing may be distributed across APEX instances running on multiple physical or virtual machines using technologies such as Distributed Hash Tables. This allows many distributed policy instances to be deployed to handle a large incoming trigger event load.

In the large stadium scenario described in the Background section if adaptive policies are implemented we can take the context from the trigger (number of attached users, traffic volume increase) and combine that with other contextual information (e.g. public event schedules, football association fixtures, etc.) to provide for a very different set of decisions and resulting actions, according to the established context. The context in which the network operates in the area of the stadium changes in time, e.g. empty stadium on Monday morning and full of spectators on Saturday evening, but again empty on Saturday evening when the team plays an away match. In consequence, the contextual information changes as well.

In the traffic mix equilibrium scenario also described in the Background section if adaptive policies are used one only needs to amend the goal of the policy to change the traffic mix in the network. This goal change can be done inside the policy, since it can evaluate the context (emergency situation), understand it and change the related tasks of its *Decide* state.

As the scenarios above show, adaptive policies allow network management system to be guided by business or network goals as it governs the network it is managing. This method in its various embodiments allows the network to be managed autonomously, ensuring the system achieves what it should and avoids unacceptable situations. The network is managed in a consistent and cohesive way with a coherent and self-adjustable decision making process that adapts as the goals and environment of the management system change.

With reference to Figure 3 one embodiment of a network management system node 300 operative to operate in accordance with the method described in this document is now to be disclosed. The network management system node 300 is operative to use an adaptive policy and comprises a processor 302 and a memory 304. The memory 304 contains instructions executable by the processor 302. Said network management system node 300 is further operative to receive a trigger event and obtain information representative of at least one context in which the network operates. The node 300 is also operative to perform a first task from a first set of tasks, wherein the first task is selected based on the trigger event and information representative of at least one of the contexts in which the network operates. The node 300 is operative to perform a subsequent task from a subsequent set of tasks. The subsequent task is selected based on an output produced by performing a preceding task and information representative of at least one of the contexts in which the network operates. The network management system node 300 is operative to repeat the act of performing a subsequent task until a task from a final set of tasks is selected and performed. Further, the node 300 is operative to produce an action event by performing the task selected from the final set of tasks and to forward the action event for execution.

In a preferred embodiment the network management system node 300 is further operative to produce information representative of an outgoing context associated with the action event by performing the task selected from the final set of tasks and to forward, with the action event, the information representative of the outgoing context. In an alternative embodiment the action event and the outgoing context may be forwarded separately (e.g. as separate messages).

The node 300 also comprises an interface 306 for communication with the network.

The network management system node 300 in its various embodiments is adapted to operate in accordance with the embodiments of the method described in this document.

Figure 5 shows an Adaptive Policy Apparatus 500 for telecommunication management, which is one of the possible embodiments of the network management system node 300. In one embodiment, during execution of the instructions, functional components of the network management system node 300 are initialised in the processor 302. These functional components include Adaptive Policy Execution (APEX) 402 module with at least one adaptive policy 408 with the four MEDA states: *Match,* 502, *Establish,* 504, *Decide,* 506 and *Act,* 508. In alternative embodiments these fuctional software modules may be realised as specialised hardware components. Again, depending on embodiment these specialised hardware components may be integrated into one of more chips or they may be implemented as discrete components.

In this apparatus, adaptive policies, 408 (only one is illustrated) run in one or a number of Adaptive Policy Execution Environments (APEXs), 402. Events, 416, are received from a triggering system, 404, which can be any system that forwards events such as an analytics system, a network element, or a fault management system. The apparatus 500, 300 processes the event and forwards a resulting action event 418 to an actioning system 406 (only one is illustrated). An actioning system is any system that takes an event and performs an action based on this event. The actioning system can be a configuration deployment system, a workflow system, a simple script that issues a set of commands towards a network, or even another Adaptive Policy Execution Environment.

Tasks are designed in a task design component, 512 and the tasks are constrained by metadata describing what context is available to the system. Similarly, a policy authoring component 510 is constrained by the context that is defined as being available in the metadata and by the tasks that were designed in the task design component, 510. In one embodiment policy authoring 510 and task design 512 components are not part of the apparatus 500, 300, but there may be alternative embodiments in which one or both of these components is integrated within the apparatus. The entire system is constrained by metadata, that describes what context is available and what way that context can be manipulated. The metadata is used by the APEX 402 as well as the other components.

In alternative embodiments the Adaptive Policy Apparatus 500, 300, may include a context collector 514, context coordinator 516, policy deployment module 518 and an adaptive policy knowledge base 520. These components in various combinations may be part of the apparatus or be external components with which the apparatus communicates in operation.

As discussed earlier, four types of context are considered in embodiments of this invention. Global context $C_g$ is available and modifiable across all policy instances running in a given system. Examples of global context might be the cell or network topology of the management system. Policy context $C_p$ is available and modifiable only across instances of a particular policy. The current *web page download time* of sessions in a particular cell might be part of the policy context of a policy managing web browsing Quality of Experience. The incoming context $C_i$ of an event is the information carried into a policy by an event such as its fields and the reason the was triggered. The outgoing context $C_o$ is the information carried out of a policy by an actioning event and is the fields of the event together with information such as what policy logic caused this action event to be emitted.

Preferably, the task logic that is executed in each active state is selected dynamically based on the context in which an adaptive policy instance is running so these states and, by extension, the policy itself is adaptable (i.e. adaptive policy). Preferably, each adaptive policy executes four states; *Match, Establish, Decide, and Act,* each of which is adaptive. Preferably, in each of these states the global context, policy context, and incoming context are examined to determine which policy logic should be executed from a set of policy logic available in each state.

Context, or to be more precise information representative of the context, may be collected from many sources and may be in many forms. The context collector 514 is used to collect information representative of a context of a particular type from a particular source. For example, the context collector 514 might read topology information from an underlying network management system or other network management system using a context collector that implements the API (Application Programming Interface) towards the network management system. Another context collector, 514, may read context information in Resource Description Framework (RDF) format from a weather or news service. When context is collected, it is forwarded to the context coordinator, 516, which determines if the context is a global context or a policy context and forwards it to the appropriate context store in the APEX, 402.

Preferably, business goals, 410, or domain goals, 412, are considered as global and policy contexts and are handled in the system in the same manner as all other context. The policy logic in policies is developed to ensure that the system converges towards the business or domain goals specified in global and policy contexts.

The apparatus 500, 300 may consider many types of context. Business and domain goals may be specified. An adaptive policy may consider information from social networks, internet-connected devices such as security cameras or smart meters, quality of experience indications from end user devices, or information from retail, meteorological, news, or sporting event sources. Information obtained from social networks and the other sources mentioned here above, when taken on its own, represents the global context (i.e. environment in which the network operates). Policies may define specific behaviour of the network that depends on the global context. For example if rainfall intensity is below 2.5mm/hour transmit power in the cell should be $1{\times}P$, if the rainfall intensity is between 2.5mm/hour and 10mm/hour then transmit power in the cell should be $1.2{\times}P$, etc. These policies define the policy context in which the network operates.

The task design component 512 shown in Figure 5 is used to specify the policy logic, or tasks, that may be executed in the MEDA (*Match, Establish, Decide,* and *Act*) states of an instance of an adaptive policy, 408, in the APEX, 402. The policy authoring component 510 is used to design and build policies. The policy deployment component 518 is used to plan and execute changes to policies running in the APEX 402 (in more than one APEX in alternative embodiments). An important function of the policy deployment component 518 is to ensure consistency across the set of policies running in the APEX 402 as a policy deployment operation proceeds.

In one embodiment of the present invention, context is modelled as shown in Figure 6. Preferably, all components in the apparatus use metadata of an adaptive policy to understand the structure of the context components in the apparatus are using and manipulating. Each APEX holds its current context in an Adaptive Policy Knowledge Base, 520.

In a preferred embodiment all information representative of context used in the solution disclosed in this document is modelled as metadata 602. This metadata describes the structure, constraints, and relationships that context may have. Metadata may be defined using UML (Universal Modelling Language), semantically using an ontology language such as OWL (Web Ontology Language) or using some other modelling method. Preferably, metadata is made available to all components in the apparatus 500 using a library mechanism. The metadata is defined during task design, 512, and policy authoring, 524. The designer of a task or policy describes the global and policy contexts that a task or policy uses and the task design component and policy authoring component generate the metadata for the global context and policy context and store it in the Adaptive Policy Knowledge Base, 520. When policy authoring component, 510, is used to compose a policy from its states, the metadata for the incoming context of the trigger event, the outgoing context of the action event, and the intermediate incoming and outgoing context is stored by policy authoring, 510, in the Adaptive Policy Knowledge Base, 520.

The following types of metadata are defined:

- Global context $C_g$ defines all global metadata entities;
- Policy context $C_p$ defines policy context metadata, with a separate individual policy context metadata definition $C_px$ existing for each of s policies defined, where $x \in \{1,2,...s\}$;
- Incoming context $C_i$ defines incoming context metadata, with a separate individual incoming context metadata definition $C_ix$ existing for each of $q$ incoming events defined, where $x \in \{1,2, ...q\}$;
- Outgoing context $C_o$ defines outgoing context metadata, with a separate individual incoming context metadata definition $C_ox$ existing for each of $r$ outgoing events defined, where $x \in \{1,2,...r\}$.

In a preferred embodiment the apparatus 500 holds a model of its current context as an Adaptive Policy Knowledge Base 520. The Adaptive Policy Knowledge Base 520 is distributed across APEX instances and may be held by means such as a semantic model, as objects in a programming language such as Java or C++, or in a database. The last embodiment is illustrated in Figure 5. It may be held in memory, may be persisted to disk or may be replicated. Individual context models are held in the knowledge base for global context $C_g$, policy context $C_p$, incoming context $C_i$, and outgoing context $C_o$ as is shown in Figure 6.

An adaptive policy may be represented as a state machine. One representation of an adaptive policy instance running in an APEX as a state machine is shown in Figure 7. There are four active states, *Match* 502, *Establish* 504, *Decide* 506 and *Act* 508, that an adaptive policy instance may enter when handling an event. There is a further passive state, *Inactive* 702, used for adaptive policy housekeeping. In alternative embodiments of the state machine there may be more than one passive state.

In one embodiment, an adaptive policy 408 instance runs as a thread in an APEX 402, which runs as a process on a computing device 500, 300. At start-up, the adaptive policy 408 instance enters the *Inactive* state 702. When it has initialized its policy context, it is ready to be activated, at which point it enters the *Match* 502 state and waits for an incoming trigger event 416. On reception of an event, it recognizes the incoming event and its context and transforms to the *Establish* state 504. In the *Establish* state 504, it determines the situation that generated the incoming event and transforms to the *Decide* state 506. In that state, the adaptive policy instance resolves the correct course of action to take and enters the *Act* state 508. In the *Act* state 508, it determines the best way to realize that course of action and issues an appropriate action event 418. It then transforms back to the *Match* state 502 and awaits another trigger event.

If the adaptive policy instance 408 is inactivated or if an error occurs in any of the four active states or if the logic of the adaptive policy instance is to be updated, the adaptive policy transforms to the *Inactive* state 702. From the *Inactive* state 702, it can be re-initialized and restarted handling events in the *Match* state 502. Alternatively, the adaptive policy instance can exit, 704.

The diagram in Figure 8 shows an embodiment of how an adaptive policy instance processes a trigger event 416 through its four active states and issues an action event. One can observe that the manner of execution in each of the four states, 502 - 508, is identical. In each state, execution commences on reception of an incoming event with incoming context $C_{ix}$, 802, and completes with issuance of an outgoing event with outgoing context $C_{ox}$, 804, where x refers to the different active states. In the embodiment illustrated in Figure 8 the incoming context arriving with the trigger event, $C_i$, is an incoming context for the Match state, $C_{im}$. Similarly, the outgoing context accompanying the action event, $C_o$, is the outgoing context of the Act state, $C_{oa}$. What distinguishes the states is the task selection logic 806 and tasks 808 specified for each of the four MEDA (Match, Establish, Decide, Act) states. As discussed earlier, in certain embodiments, in situations when very simple action events are produced for the actioning system production of the information representative of the outgoing context in the *Act* state is omitted. The actioning system will be able to act correctly even without the information representative of the outgoing context.

A policy is adaptive because the manner of execution in each state as shown in Figure 8 is adaptive. In each state, the adaptive policy instance 408 executes task selection logic 806 to select a specific task 808 from a set of available tasks. Once a task has been selected, the adaptive policy instance 408 executes the selected task 808.

Given an incoming event $q$ and an adaptive policy instance $s$, the selection function of the task selection logic 806 of an active state of the adaptive policy may be expressed using the equation below:

$$Task = f_{select}(C_{iq}, C_{ps}, C_g)$$

The selection function uses the incoming context of the incoming event $q$ (i.e. $C_{iq}$), the policy context 810 of the adaptive policy instance $s$ (i.e. $C_{ps}$), 408, and the global context 812 to select the task 808 to execute (i.e. $C_g$). The task selection logic 806 is specified in a means that allows it to execute on the APEX, which may be a set of rules, a list of parameters such as priority, time or location, a script in a scripting language such as Perl or Python, a programmatic object injected into the active state of the adaptive policy at run time, or may be statically defined.

Once a task has been selected, the logic, 816, of that task is executed. Given a selected task, 808, and its parameters, 814, an incoming event q and an adaptive policy instance s, 408, the function of the task logic, 816, of an active state of the adaptive policy may be expressed using the equation below:

$$Event_r[C_{or}] = f_{Task}(Par_{Task}, C_{iq}, C_{ps}, C_g)$$

The task logic, 816, uses the incoming context of the incoming event q, the policy context, 810, of the adaptive policy instance s, 408, the global context, 812, and the task parameters, 814, to execute and to generate an event r with outgoing context $C_{or}$. In a preferred embodiment task parameters are configuration parameters for a task. For example a task might have to be configured to expect date values in YYYY-MM-DD or DD/MM/YY or MM/DD/YY format or in one installation a task may be configured to issue alarms at 90% load and another installation at 85% load. The mechanism described above is carried out in each one of the four active states 502 - 508 and an output of one active state is an input of the following active state in the series. The event or events emitted by the *Act* state, 508, or an adaptive policy is the action event, 418, that is output. The task logic is specified in a means that allows it to execute on the APEX, which may be a set of rules, a script in a scripting language such as Python or Perl, or a programmatic object injected at run time into the implementation of the active state of the adaptive policy.

The flowchart in Figure 9 illustrates one embodiment of the flow of execution of an adaptive policy thread in handing an incoming trigger event through to issuing an outgoing action event. It shows how the method cascades through each of the four active states, 502 - 508, in turn.

When an adaptive policy is in the *Match* state, 902, it is ready and awaits a trigger event with its associated incoming context $C_i$, 904. When the trigger event and incoming context are received they are forwarded to task selection logic 806 of the *Match* state 502 for handling. The outcome of the handling is an output event with an output context of the *Match* state, 906. If the handling of the trigger event failed, 908 (branch "No"), the MEDA loop stops. If the handling of the trigger event was successful, 908 (branch "Yes"), the method proceeds to check if the current active state is the *Act* state. Since the method only started and the current active state is *Match* the answer in step 910 is "No" and the method proceeds to increment the active state to the next one in the MEDA loop, 912. The outcome of step 912 in this instance is transition to the *Establish* state. In the following step the output of the preceding active state is taken as the input for the next active state (i.e. the output event and output context produced in step 906 are now input) 914. Then the method loops back to step 906 and the same steps 906 - 910 are performed until the answer to the question in step 910 (Is the current active state *"Act"?*) is "Yes". Answer "Yes" means that it was the last active state in the MEDA loop and the output of this active state is an action event with an outgoing context which is forwarded to an actioning system, 916. After this operation the method loops back to the *Match* active state and waits for another trigger event.

The flowchart in Figure 10 shows how the method, in a preferred embodiment, executes each active state (i.e. step 906 from Figure 9) in an adaptive policy instance by invoking the task selection logic, 806, and task logic, 816.

When an adaptive policy is in the *Match* state, the *Match* task selector must examine the context of the trigger event and select a task that can deal with the incoming event context. If a trigger event enters the system with context x, an adaptive policy in *Match* state selects and executes a task that can deal with context x.

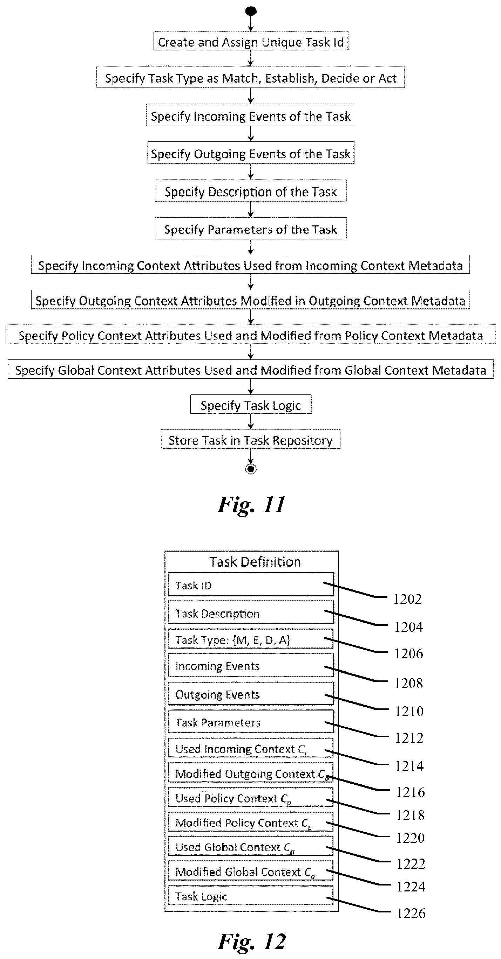

Consider an adaptive policy with a trigger event UE_STRANGE_TRAFFIC in its *Match* state. The adaptive policy has three tasks that may be selected in its *Match* state: UE_STRANGE_TRAFFIC, UE_STRANGE_TRAFFIC_WITH_PATTERN, or UE_STRANGE_TRAFFIC_WITH_DPI, where DPI stands for Deep Packet Inspection. If the UE_STRANGE TRAFFIC event enters the APEX with context {ue list} the first task is selected, 1002. If the event enters with the context {ue list + traffic pattern}, the second event is selected, 1002. If the event enters with the context {ue list + L7 dpi}, the adaptive policy selects the third task, 1002, where L7 refers to layer 7 classification of network traffic in Deep Packet Inspection. When a task is selected, be that UE_STRANGE_TRAFFIC, UE_STRANGE_TRAFFIC_WITH_PATTERN, or UE_STRANGE_TRAFFIC_WITH_DPI, the task logic 1226 of that task is executed, 1004. For example, if the task UE_STRANGE_TRAFFIC_WITH_DPI is selected, 1002, the task logic 1226 of task UE_STRANGE_TRAFFIC_WITH_DPI is executed in step 1004, where the task may check, for example, that the inspection information returned is indeed for the UE in question. When execution of the task, 1004, completes, APEX, 402, reads the metadata for the task from the task definition (see Figure 12) and updates, 1006, the outgoing context 1216, policy context, 1220, and global context 1224 that has been set by the task logic of the task.

In the *Establish* state, a situation is defined; the task determines how to process the event forwarded from the *Match* state together with its lifted context while considering the policy context of the adaptive policy as well as global context. An *Establish* task may consider the UE_STRANGE_TRAFFIC forwarded event and its context with one of the following Policy or Global context sets: {UE location}, {UE time}, {UE location and time}, {UE location, time, and UE traffic analysis}, 1002, and selects a UE_STRANGE_TRAFFIC_ESTABLISH task. The task logic 1226 of the UE_STRANGE_TRAFFIC_ESTABLISH task is executed in step 1004, with that task, for example, examining the DPI information returned to see if it indicates that malicious traffic is present. When execution of the task, 1004, completes, APEX, 402, reads the metadata for the task from the task definition (see Figure 12) and updates, 1006, the outgoing context 1216, policy context, 1220, and global context 1224 that has been set by the task logic of the task.

In the *Decide* state the adaptive policy must arrive at a decision; determine what possible actions are available and select the best option based on the situation described in the context received in the event forwarded from the *Establish* state. Possible options might be {move UE to GSM}, {move UE to new MME plus start this MME}, {move UE to LTE} or {move UE to SDN}, where MME stands for Mobility Management Entity, UE for User Equipment and SDN for Software Defined Networking, 1002, and selects a UE_STRANGE_TRAFFIC_DECIDE task. The task logic 1226 of the UE_STRANGE_TRAFFIC_DECIDE task is executed in step 1004. With that task, for example, deciding to deal with malicious traffic by deactivating the UE or informing customer care. When execution of the task, 1004, completes, APEX, 402, reads the metadata for the task from the task definition (see Figure 12) and updates, 1006, the outgoing context 1216, policy context, 1220, and global context 1224 that has been set by the task logic of the task.

The *Act* state must infer functional and non-functional properties for the option selected and forwarded from the *Decide* state. Examples of functional and non-functional properties are {requires security considerations}, {requires access control considerations}, {requires cost of execution considerations}, or {requires real-time of execution consideration}. For example, the Task Selection Logic 1002 will use the incoming context from the Decide task to see that Customer Care should be notified of malicious traffic. It may use, for example, select a NOTIFY_CUSTOMER_CARE_EMAIL, NOTIFY_CUSTOMER_CARE_SMS, or NOTIFY_CUSTOMER_CARE_IM task to notify customer care. A global context variable such as NOTIFICATION_MECHANISM may be used to select the appropriate task, 1002. If, for example the NOTIFICATION_MECHANISM is set to SMS, the NOTIFY_CUSTOMER_CARE_SMS task is selected, 1002. The task logic 1226 of the NOTIFY_CUSTOMER_CARE_SMS task is executed in step 1004. The execution of the task in step 1004 results, for example, in putting a message describing the malicious traffic in a SMS message and packing it in the outgoing context of an action event for the SMS system. When execution of the task, 1004, completes, APEX, 402, reads the metadata for the task from the task definition (see Figure 12) and updates, 1006, the outgoing context 1216, policy context, 1220, and global context 1224 that has been set by the task logic of the task.

The following three examples illustrate the execution of adaptive policies.

**Example 1:**

- Match: trigger "UE_with_strange_behaviour" + context as {ue id, ue id + traffic, ue id + traffic + Denial of Service analyser);
- Establish: match context plus {ue locations, time of detection, period of detection, UE user} or a set of the above;
- Decide: based on establish situation, decide to {keep on monitoring, move to special MME, quarantine, drop};
- Act: invoke {do nothing, new MME provisioning plus traffic redirection, put on quarantine SDN, drop}.

**Example 2:**

- Match: trigger "Cell_reconfig_too_frequent" + context {power, antenna tilt, power + antenna tilt};
- Establish: match context + {nothing, neighbouring cell conditions};
- Decide: based on establish situation decide on {resolve ES/COC SON conflict, resolve too-frequent-cell-reconfiguration}, where ES stands for Energy Saving and COC stands for Cell Outage Compensation as in ETSI TS132522 v.11.5.1;
- Act: invoke {ES/COC coordination mechanism, cell to ignore configuration change for X minutes, notify external system about problem}.

**Example 3:**

- Match: trigger "Cel_QoS_loss" with mixed context of {cell traffic mix, cell location, time};
- Establish: based on match context, select task that deals with actual context mix;
- Decide: based on cell situation, select decision that uses KPIs for QoE in optimal way from given context;
- Act: select task that can invoke actions the fastest.

With reference to Figure 11 a process of creating a task is illustrated. Tasks and policies are developed using the task design, 512, and policy authoring, 510, components shown in Figure 5. Tasks are created, updated and deleted, and are stored in a task repository, 522, by the task design component, 512. The policy authoring component, 510, uses the tasks stored in the task repository, 522, to create and update adaptive policies. Adaptive policies are stored in a policy repository, 524. The flowchart in Figure 11 illustrates one possible process of creating a task as executed by the task design component, 512. The illustration of the process of creating a task as shown in Figure 11 is self-explanatory and takes a form of a straight sequence of operations adequately described in the drawing itself. The methods for updating and deleting a task are not detailed but are extensions of the process for creating a task.

The table in Figure 12 shows one possible example of attributes of a task in an adaptive policy. As well as a unique Task ID, 1202, and a Task description, 1204, each task is associated with a particular active MEDA state, 1206, in adaptive policies. The incoming and outgoing events, 1208 and 1210, of the task are defined from those available in the metadata of the system. Each task has a set of configuration parameters, 1212, which are defined in the task design component, 512, and are set in the policy deployment component, 518. The task design component, 512, uses the metadata definitions shown in Figure 6 to allow specification of the used and modified Incoming, Outgoing, Policy, and Global context in the task, 1214 - 1224. Finally, the task logic, 1226, is specified in a means that allows it to be executed in an APEX.

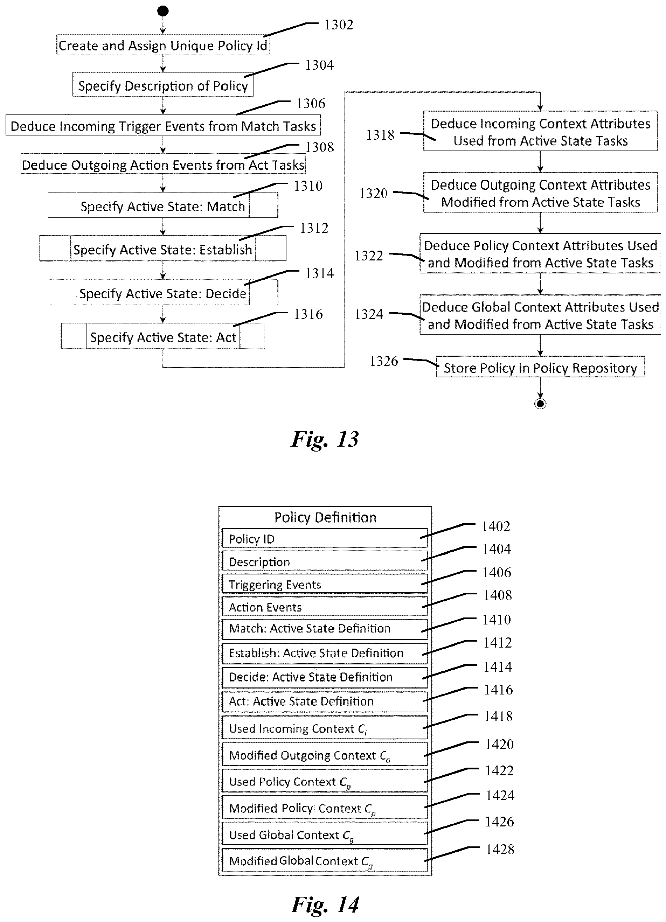

The flowchart in Figure 13 shows one possible example of a method for creating an adaptive policy as executed by the policy authoring component, 510. Methods for updating and deleting an adaptive policy are not detailed in this document, but are extensions of the method for creating an adaptive policy. A policy is stitched together by specifying the sets of possible tasks that are available in each of the active states of the adaptive policy.

Preferably each adaptive policy has a unique Policy ID, 1302, and a policy description, 1304. The set of possible triggering events is deduced by examining the incoming events specified on the tasks in the task set of the *Match* state, 1306. Likewise, the set of possible action events is deduced by examining the outgoing events specified on the tasks in the task set of the *Act* state, 1308. The policy authoring component, 510, uses the metadata definitions shown in Figure 6 together with the context specifications in the task definitions in each MEDA state to deduce the used and modified Incoming, Outgoing, Policy, and Global contexts of the policy, 1318 - 1326.

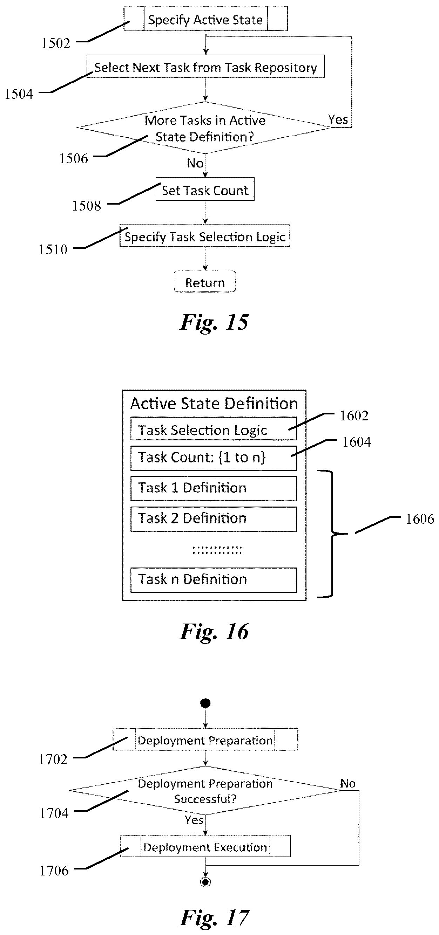

Steps 1310 - 1316 are described below with reference to Figures 15 and 16. Preferably the four active states are created as shown in the flowchart in Figure 15. An active state can be described as a set of tasks and a task selection logic, which defines logical dependency between an input (event + context) and at least one task to be executed from the set of tasks in the active state. The active state is specified (*Match, Establish, Decide, Act*), 1502 and a task is selected 1504 from the task repository 522. The selection of tasks for the active state continues until there is no more tasks that could be used in this particular active state of this particular adaptive policy, 1506. Task count is set, 1508, and the task selection logic is specified in the last step, 1510. The methods for updating and deleting an active state in an adaptive policy are not detailed but are extensions of the method for creating an active state in an adaptive policy. The table in Figure 16 shows the attributes of an active state (i.e. task selection logic 1602, task count 1604 and definitions of tasks 1606) as composed by executing the steps illustrated in Figure 15. In an alternative embodiment the step of setting the task count is omitted. The number of tasks is implicitly there anyway and can be easily determined by getting the size of the task list. In this alternative embodiment the table presented in Figure 16 does not include the task count information, element 1604.

As a result of performing the steps illustrated in Figures 13 and 15 and described above the attributes of an adaptive policy may be recorded in the form of a table as illustrated in Figure 14. The entries 1402 - 1420 correspond to outputs of steps 1302 - 1320 illustrated in Figure 13, whereas entries 1422 and 1424 correspond to output of step 1322 in Figure 13 and entries 1426 and 1428 correspond to output of step 1324 in Figure 13.

In a preferred embodiment adaptive policy instances are deployed into APEX, 402, using the policy deployment component 518, as shown in Figure 5. Policy deployment executes using the two-phase method shown in Figure 17. Firstly a deployment preparation phase is executed, 1702. If that phase executes successfully, 1704, the policy instances are deployed, 1706 in the deployment execution phase.

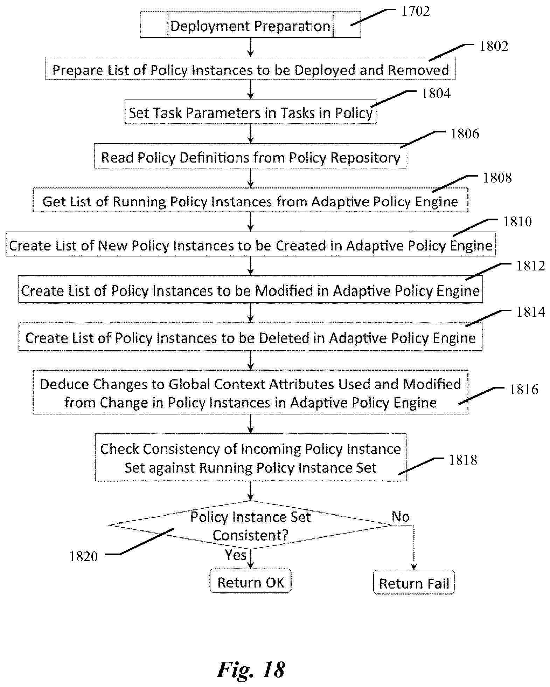

The flowchart shown in Figure 18 shows one possible implementation of the step of preparation, 1702, of adaptive policy instances for deployment. Firstly, a set of policy instances to be deployed is prepared, 1802. This list may be inferred by looking at the loading of existing policy instances running in APEXs or using statistical methods to determine the possible policy instances that may be needed or may be specified manually by an operator. The task parameters for each task in each active state of the adaptive policy are set, 1804, using templates, default values, or some other automatic or manual means. In the next step definitions of policies are read, 1806, from policy repository 524.

In a preferred embodiment the policy deployment component, 518, then fetches, 1808, a list of currently running adaptive policy instances from each APEX and compares that list to the required adaptive policy instance list. This comparison results in a list of new policy instances to be created, 1810, a list of policy instances to be updated, 1812, and a list of policy instances to be deleted, 1814.

Also preferably the policy deployment component, 518, uses the global context attributes in each impacted policy to deduce, 1816, the changes that will occur to global context. This results in a further list of adaptive policy instances that, although not modified or deleted, are affected by changes to global context.

The final step of the deployment phase carries out a consistency check, 1818, of the new Incoming, Outgoing, Policy, and Global context for each APEX against the existing Incoming, Outgoing, Policy, and Global context to ensure that the policy deployment operation does not result in inconsistencies. If the consistency check returns OK, 1820 - branch YES, the policy is ready to be deployed, otherwise a failure is reported, 1820 - branch NO.

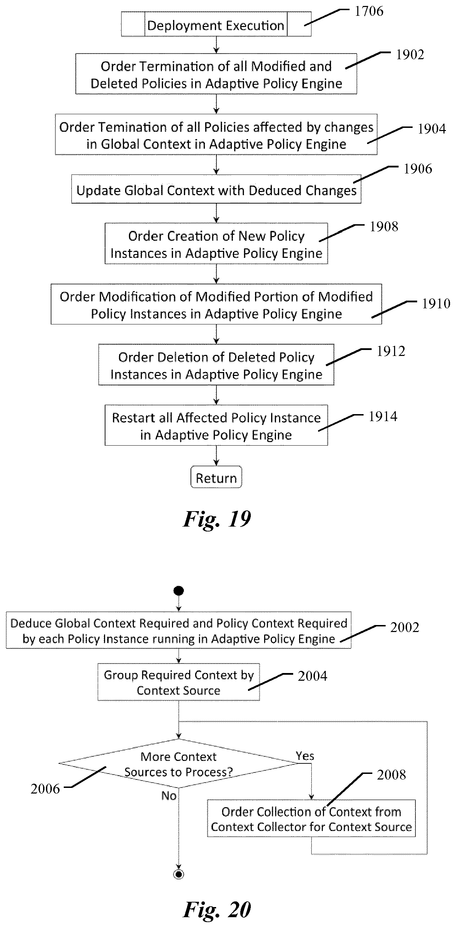

[0091] The flowchart shown in Figure 19 shows one possible implementation of a method used for execution of deployment, 1706, of adaptive policy instances into APEX. All modified and deleted adaptive policy instances are terminated, 1902, as are all adaptive policy instances affected by changes to global context, 1904. The Policy Deployment component then orders updates to the global context in the APEX, 1906.

New policy instances are then deployed 1908. Changes to existing policy instances are deployed such as changes to task selection logic or task logic, specification of new tasks in MEDA states, or changes to task parameter values, 1910. Policy instances to be removed are deleted, 1912. Finally, all adaptive policy instances are started or restarted, 1914.

Figure 20 shows a flowchart that explains a preferred embodiment of ordering of context collection used by the context coordinator, 516, shown in Figure 5. When an adaptive policy instance transforms from state *Inactive* to state *Match* (see Figure 7), it asks the context coordinator component, 516, to start collection of the global context and Policy context it needs to execute, 2002. The context coordinator, 516, examines the types of context required, 2006, and groups, 2004, the required context into the categories of context for which it has context collector components, 514. The context coordinator, 516, then orders, 2008, each context collector, 514, to collect its portion of the context using its particular collection mechanism, and makes it available as policy context and/or global context.

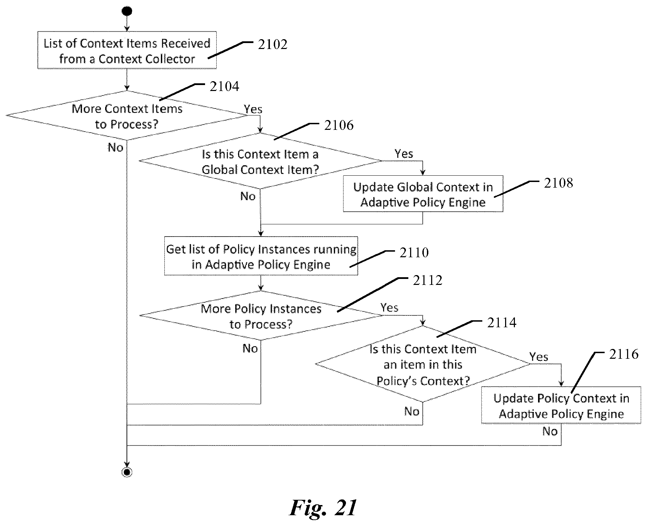

The flowchart in Figure 21 shows a preferred embodiment of delivering context by context collectors, 514, and processing context by the context coordinator, 516, shown in Figure 5. At any time during execution, the global context and policy context of policies may be changed by external factors in real time using this method.

When a context collector, 514, receives, 2102, a list of context items from its source, it forwards them to the context coordinator, 516. The context coordinator, 516, checks each, 2104, item of context in turn by examining the metadata and knowledge base, 520, of the APEX (see Figure 6). If the context item is a global context item, 2106 - branch YES, the context coordinator, 516, updates, 2108, the global context in the APEX. If it is not a global context item, 2106 - branch NO, a list of all adaptive policy instances running in APEX is obtained, 2110, 2112. If the context item is a policy context item in an adaptive policy, 2114 - branch YES, the context coordinator, 516, updates the policy context of that adaptive policy in the APEX, 2116.

Because context information may be collected from many sources and may be in many forms, each context collector, 514, implements a particular mechanism to collect context from its source. All context collectors accept orders from and deliver context to the context coordinator component, 516, using a common interface. That interface may be implemented as an Application Programming Interface (API), using files, or using any other appropriate communication mechanism.

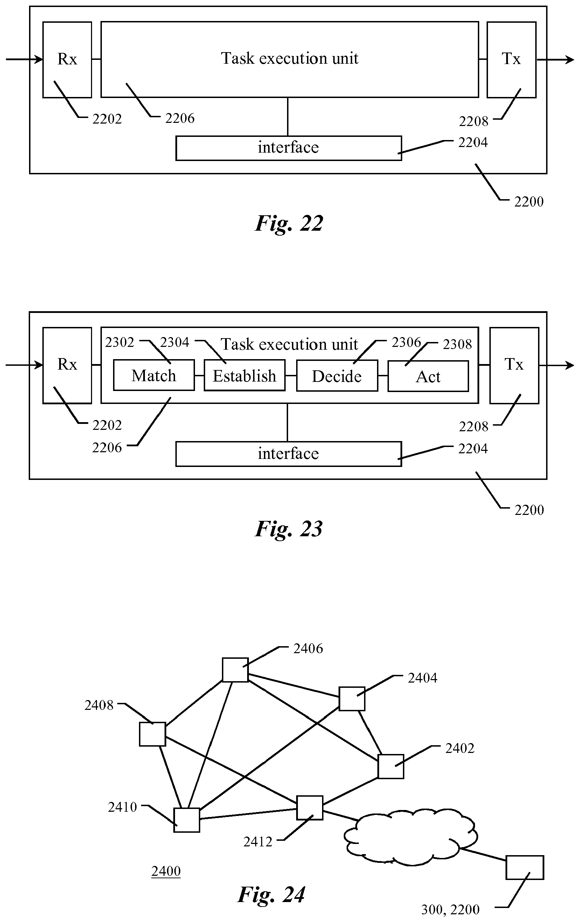

Figure 22 illustrates an alternative embodiment of a network management system node, 2200, operative to use an adaptive policy. In this embodiment, as in the other embodiments described in this document, the adaptive policy is defined by a plurality of sets of tasks. The network management system node, 2200, comprises a receiver, 2202, for receiving a trigger event and a transmitter, 2208, for forwarding for execution an action event produced in operation by the network management system node, 2200. The node also comprises an interface, 2204, for obtaining information representative of at least one context in which the network operates. The main part of the node 2200 is a task execution unit 2206 for performing a first task from a first set of tasks. The first task is selected by the task execution unit based on the trigger event and information representative of at least one of the contexts in which the network operates. The task execution unit, 2206, also performs a subsequent task from a subsequent set of tasks. The subsequent task is selected by the task execution unit based on an output produced by performing a preceding task and information representative of at least one of the contexts in which the network operates. The act of performing a subsequent task is repeated until a task from a final set of tasks is selected and performed as it is illustrated by the loop 106 - 202 in Figure 2. The task execution unit, 2206, produces the action event by performing the task selected from the final set of tasks.

Figure 23 illustrates another embodiment of the network management system node, 2200. In this embodiment the task execution unit, 2206, comprises four sub-units, 2302 - 2308, connected in series for performing the first task and the subsequent tasks. The sub-units, 2302 - 2308, process the trigger event and the information representative of at least one context in which the network operates. Said four sub-units comprise a Match sub-unit, 2302, for understanding the trigger event and the information representative of at least one context in which the network operates, an Establish sub-unit, 2304, for determining the situation that gave rise to the trigger event, a Decide sub-unit, 2306, for deciding on configuration change; and an Act sub-unit, 2308, for determining how to realise the configuration change.

In this embodiment the task execution unit, 2206, corresponds to the Adaptive Policy Execution Environment (APEX), 402, and the four sub-units, 2302 - 2308, correspond to the four active MEDA states: Match, 502, Establish, 504, Decide, 506 and Act, 502 discussed earlier.

The node 2200 uses the interface 2204 also for communication with the network.

The network management system node, 2200, in its various embodiments is adapted to operate in accordance with the embodiments of the method described in this document.

Figure 24 illustrates an embodiment of a communications network, 2400, comprising network elements 2402 - 2412 as well a network management system node, 300, 2200 in accordance with embodiments disclosed in this document.

Further embodiments

A method of network management using an adaptive policy, wherein the adaptive policy is defined by a plurality of sets of tasks, the method comprising:

- receiving a trigger event;
- receiving information representative of contexts in which the network operates;
- performing a first task from a first set of tasks, wherein the first task is selected based on the trigger event and information representative of the contexts in which the network operates;
- performing a subsequent task from a subsequent set of tasks, wherein the subsequent task is selected based on an output produced by performing a preceding task and information representative of the contexts in which the network operates, wherein the act of performing a subsequent task is repeated until a task selected from a final set of tasks is selected and performed;
- producing an Action Event and information representative of an Outgoing Context associated with the Action Event, wherein the Action Event and information representative of the Outgoing Context is produced by performing the task selected from the final set of tasks;
- forwarding for execution the Action Event and information representative of the associated Outgoing Context.

One embodiment of the method is illustrated in Figure 2. In the embodiment illustrated in Figure 2 the adaptive policy is defined by a plurality of sets of tasks and the method comprises receiving 102 a trigger event and receiving 104 information representative of contexts in which the network operates. The two acts of receiving may be performed in any order or simultaneously. Then the method comprises an act of performing 106 a first task from a first set of tasks, wherein the first task is selected based on the trigger event and information representative of the contexts in which the network operates. This is followed by performing 106 a subsequent task from a subsequent set of tasks. The subsequent task is selected based on an output produced by performing a preceding task and information representative of the contexts in which the network operates. The act of performing a subsequent task is repeated until 202 a task selected from a final set of tasks is selected and performed. The method further comprises producing 208 an action event and information representative of an outgoing context associated with the action event, wherein the action event and information representative of the outgoing context is produced by performing the task selected from the final set of tasks. The action event and information representative of the associated outgoing context is then forwarded, 208, to a recipient network element for execution.

The order of acts 102 and 104 is not important for the invention. In alternative embodiments the order of acts 102 and 104 may be reversed or both acts may be performed at the same time.

In one embodiment the policy and global contexts are bundled together in an external aggregator and delivered in this aggregated form for processing. Alternatively the information representative of the policy and global contexts is delivered separately.

A network management system node comprising a processor and a memory, said memory containing instructions executable by said processor, whereby said network management system node is operative to use an adaptive policy, wherein the adaptive policy is defined by a plurality of sets of tasks, and said network management system node is further operative to:

- receive a trigger event;
- receive information representative of contexts in which the network operates;
- perform a first task from a first set of tasks, wherein the first task is selected based on the trigger event and information representative of the contexts in which the network operates;
- perform a subsequent task from a subsequent set of tasks, wherein the subsequent task is selected based on an output produced by performing a preceding task and information representative of the contexts in which the network operates, wherein the act of performing a subsequent task is repeated until a task selected from a final set of tasks is selected and performed;

- produce an action event and information representative of an outgoing context associated with the action Event, wherein the action event and information representative of the outgoing context is produced by performing the task selected from the final set of tasks;
- forward for execution the action event and information representative of the associated outgoing context.

One embodiment of the network management system node 300 is illustrated in Figure 3. In addition to the processor 302 and memory 304 the network management system node 300 comprises an interface 306 for communication with the network. The interface 306 is used for receiving the trigger event and incoming context as well as for forwarding action event and outgoing context. In alternative embodiments the interface may be used for any other communication with the network management system node 300 (e.g. for receiving global and policy contexts as well as receiving definitions of adaptive policies and adaptive policies metadata). In yet another alternative embodiment the network management system node may have more than one communication interface.

## Abbreviations

| | |
|---|---|
| APEX ........ | Adaptive Policy Execution Environment |
| API ........ | Application Programming Interface |
| CIM ........ | Common Information Model |
| COMPA ........ | Control, Orchestration, Management, Policy and Analytics |
| COC ........ | Cell Outage Compensation |
| DMTF ........ | Distributed Management Task Force |
| DPI ........ | Deep Packet Inspection |
| DSL ........ | Domain Specific Language |
| ECA ........ | Event Condition Action |
| ENM ........ | Ericsson Network Manager |
| EPC ........ | Evolved Packet Core |
| ES ........ | Energy Saving |
| ETSI ........ | European Telecommunications Standards Institute |
| HTTP ........ | Hypertext Transfer Protocol |
| IETF ........ | Internet Engineering Task Force |
| MEDA ........ | Match Establish Decide Act |
| MME ........ | Mobility Management Entity |
| NFV ........ | Network Function Virtualization |
| ODP ........ | Open Distributed Processing |
| OMG ........ | Open Management Group |
| OODA ........ | Observe Orient Decide Act |
| OWL ........ | Web Ontology Language |
| PBM ........ | Policy Based Management |
| PBMS ........ | Policy Based Management System |
| PCIM ........ | Policy Core Information Model |
| RAN ........ | Radio Access Network |
| RDF ........ | Resource Description Framework |
| SBVR ........ | Semantics of Business Vocabulary and Rules |
| SDN ........ | Software Defined Networking |
| SID ........ | Shared Information and Data Model |
| SMS ........ | Short Message Service |
| UE ........ | User Equipment |
| UML ........ | Universal Modelling Language |
| XACML ........ | eXtensible Access Control Markup Language |
| XML ........ | eXtensible Markup Language |

## References

[Bell & LaPadula, 1973] Bell, D.E. & LaPadula, L.J., "Secure Computer Systems: Mathematical Foundations", DTIC Document, no. MITRE Technical Report 2547, Mar 1973

[Chan et al., 2011] Chan, H.Y., Chess, D.M., Kwok, T.Y. & White, S.R., "Policy-Based Management System with Automatic Policy Selection and Creation Capabilities by using Singular Value Decomposition Technique", US patent no. US7996353, 2011

[Coulouris et al., 2012] Coulouris, G., Dollimore, J., Kindberg, T. & Blair, G., "Distributed Systems: Concepts and Design", Addison-Wesley, ISBN 978-0-13-214301-1, 2012

[Dobson & McDermid, 1989] Dobson, J.E. & McDermid, J.A., "A Framework for Expressing Models of Security Policy", Security and Privacy, 1989. Proceedings., 1989 IEEE Symposium on, pp. 229-239, May 1989

[Jomier, 1981] Jomier, G., "A Mathematical Model for the Comparison of Static and Dynamic Memory Allocation in a Paged System", IEEE Trans. Software Eng., vol. 7, no. 4, pp. 375-385, Jul 1981

[Kamoun, 1981] Kamoun, F., "A Drop and Throttle Flow Control Policy for Computer Networks", Communications, IEEE Transactions on, IEEE, vol. 29, no. 4, pp. 444-452, 1981

[Levin et al., 1975] Levin, R., Cohen, E., Corwin, W., Pollack, F. & Wulf, W., "Policy/Mechanism Separation in Hydra", ACM SIGOPS Operating Systems Review, vol. 9, no. 5, pp. 132-140, 1975

[Moffett et al., 1990] Moffett, J., Sloman, M. & Twidle, K., "Specifying Discretionary Access Control Policy for Distributed Systems", Computer Communications, Elsevier, vol. 13, no. 9, pp. 571-580, Nov 1990

[Moffett & Sloman, 1991] Moffett, J.D. & Sloman, M.S., "The Representation of Policies as System Objects", ACM SIGOIS Bulletin, vol. 12, no. 2-3, pp. 171-184, 1991

[Moffett & Sloman, 1993] Moffett, J.D. & Sloman, M.S., "Policy Hierarchies for Distributed Systems Management", Selected Areas in Communications, IEEE Journal on, IEEE, vol. 11, no. 9, pp. 1404-1414, 1993

[Moffett & Sloman, 1994] Moffett, J.D. & Sloman, M.S., "Policy Conflict Analysis in Distributed System Management", Journal of Organizational Computing and Electronic Commerce, Taylor and Francis, vol. 4, no. 1, pp. 1-22, 1994

[Rouse & Rouse, 1979] Rouse, W.B. & Rouse, S.H., "A Model-Based Approach to Policy Analysis in Library Networks", Systems, Man and Cybernetics, IEEE Transactions on, IEEE, vol. 9, no. 9, pp. 486-494, Sep 1979

[Sloman, 1990] Sloman, M., "Management for Open Distributed Processing", Distributed Computing Systems, 1990. Proceedings., Second IEEE Workshop on Future Trends of, pp. 533-539, Sep 1990

[Sloman, 1994] Sloman, M., "Policy Driven Management for Distributed Systems", Journal of network and Systems Management, Springer, vol. 2, no. 4, pp. 333-360, 1994

**Claims**

1. A method of network management using an adaptive policy, wherein the adaptive policy is defined by a plurality of sets of tasks, the method comprising:

   - receiving (102) a trigger event;
   - obtaining (104) information representative of at least one context in which the network operates;
   - performing (106) a first task from a first set of tasks, wherein the first task is selected based on the trigger event and the information representative of the at least one context in which the network operates;
   - performing a subsequent task from a subsequent set of tasks, wherein the subsequent task is selected based on an output produced by performing a preceding task and the information representative of the at least one context in which the network operates, and wherein the act of performing the subsequent task is repeated until a task from a final set of tasks is selected and performed;
   - producing (108, 110) an action event, wherein the action event is produced by performing the task selected from the final set of tasks; and
   - forwarding (108, 112) for execution, the action event.

2. The method as in claim 1, further comprising producing (208) information representative of an outgoing context associated with the action event by performing the task selected from the final set of tasks and forwarding the information representative of the outgoing context.

3. The method as in any one of the preceding claims, wherein the information representative of the at least one context in which the network operates comprises information representative of a global context, a policy context, or an incoming context.

4. The method as in claim 2, wherein the information representative of the outgoing context comprises information identifying a policy logic that caused production of the action event.

**5.** A network management system node (300) comprising a processor (302) and a memory (304), said memory (304) containing instructions executable by said processor (302), said network management system node (300) is operative to use an adaptive policy, wherein the adaptive policy is defined by a plurality of sets of tasks, whereby said network management system node (300) is further operative to:

- receive a trigger event;
- obtain information representative of at least one context in which the network operates;
- perform a first task from a first set of tasks, wherein the first task is selected based on the trigger event and the information representative of the at least one context in which the network operates;
- perform a subsequent task from a subsequent set of tasks, wherein the subsequent task is selected based on an output produced by performing a preceding task and the information representative of the at least one context in which the network operates; said network management system node (300) is further operative to repeat the act of performing the subsequent task until a task from a final set of tasks is selected and performed;
- produce an action event, wherein the action event is produced by performing the task selected from the final set of tasks; and
- forward for execution, the action event.

**6.** The network management system node (300) as in claim 5, wherein said network management system node (300) is further operative to produce information representative of an outgoing context associated with the action event by performing the task selected from the final set of tasks and to forward the information representative of the outgoing context.

**7.** The network management system node (300) as in any one of claims 5 or 6, wherein the information representative of the at least one context in which the network operates comprises information representative of a global context, a policy context, or an incoming context.

**8.** The network management system node (300) as in claim 7, wherein the information representative of the incoming context comprises information indicative of reason for the trigger event.

**9.** The network management system node (300) as in claim 8, wherein the information representative of the incoming context comprises at least one of a number of attached users traffic volume increase, an increase of dropped calls, a decrease of quality of service, and bit error rate increase.

**10.** The network management system node (300) as in claim 7, wherein the information representative of the global context comprises information describing an environment in which at least part of the network operates.

**11.** The network management system node (300) as in claim 7, wherein the information representative of the policy context comprises information describing how the trigger event should be handled depending on at least one of the global context and the incoming context.

**12.** The network management system node (300) as in claim 6, wherein the information representative of the outgoing context comprises information identifying a policy logic that caused production of the action event.

**13.** The network management system node (300) as in any one of claims 5-12, wherein a single trigger event is used as an input in more than one adaptive policy.

**14.** The network management system node (300) as in claim 7, wherein the information representative of at least one of the global context and the policy context changes in real time.

**15.** A communications network comprising a network management system node (300) as defined in any one of claims 5-14.

**Patentansprüche**

**1.** Verfahren zur Netzwerkverwaltung unter Verwendung einer adaptiven Richtlinie, wobei die adaptive Richtlinie durch eine Vielzahl von Sätzen von Aufgaben definiert ist, wobei das Verfahren Folgendes umfasst:

- Empfangen (102) eines Auslöserereignisses;
- Erlangen (104) von Informationen, die für mindestens einen Kontext, in dem das Netzwerk arbeitet, bezeichnend ist;
- Durchführen (106) einer ersten Aufgabe aus einem ersten Satz von Aufgaben, wobei die erste Aufgabe auf Grundlage des Auslöserereignisses und der Informationen, die für den mindestens einen Kontext, in dem das Netzwerk arbeitet, bezeichnend sind, ausgewählt wird;
- Durchführen einer nachfolgenden Aufgabe aus einem nachfolgenden Satz von Aufgaben, wobei die nachfolgende Aufgabe auf Grundlage einer Ausgabe, die durch Durchführen einer vorangehenden Aufgabe erzeugt wird, und der Informationen, die für den mindestens einen Kontext, in dem das Netzwerk arbeitet, bezeichnend sind, ausgewählt wird, und wobei der Vorgang des Durchführens der nachfolgenden Aufgabe wiederholt wird, bis eine Aufgabe aus einem letzten Satz von Aufgaben ausgewählt und durchgeführt wird;
- Erzeugen (108, 110) eines Handlungsereignisses, wobei das Handlungsereignis durch Durchführen der aus dem letzten Satz von Aufgaben ausgewählten Aufgabe erzeugt wird; und
- Weiterleiten (108, 112) des Handlungsereignisses zur Ausführung.

2. Verfahren nach Anspruch 1, ferner umfassend Erzeugen (208) von Informationen, die für einen abgehenden Kontext, der dem Handlungsereignis zugeordnet ist, bezeichnend sind, durch Durchführen der aus dem letzten Satz von Aufgaben ausgewählten Aufgabe und Weiterleiten der Informationen, die für den abgehenden Kontext bezeichnend sind.

3. Verfahren nach einem der vorstehenden Ansprüche, wobei die Informationen, die für den mindestens einen Kontext, in dem das Netzwerk arbeitet, bezeichnend sind, Informationen umfassen, die für einen globalen Kontext, einen Richtlinienkontext oder einen eingehenden Kontext bezeichnend sind.

4. Verfahren nach Anspruch 2, wobei die Informationen, die für den abgehenden Kontext bezeichnend sind, Informationen umfassen, die eine Richtlinienlogik identifizieren, die eine Erzeugung des Handlungsereignisses verursacht hat.

5. Netzwerkverwaltungssystemknoten (300), umfassend einen Prozessor (302) und einen Speicher (304), wobei der Speicher (304) Anweisungen enthält, die durch den Prozessor (302) ausführbar sind, wobei der Netzwerkverwaltungssystemknoten (300) betreibbar ist, um eine adaptive Richtlinie zu verwenden, wobei die adaptive Richtlinie durch eine Vielzahl von Sätzen von Aufgaben definiert ist, wobei der Netzwerkverwaltungssystemknoten (300) ferner für Folgendes betreibbar ist:

- Empfangen eines Auslöserereignisses;
- Erlangen von Informationen, die für mindestens einen Kontext, in dem das Netzwerk arbeitet, bezeichnend ist;
- Durchführen einer ersten Aufgabe aus einem ersten Satz von Aufgaben, wobei die erste Aufgabe auf Grundlage des Auslöserereignisses und der Informationen, die für den mindestens einen Kontext, in dem das Netzwerk arbeitet, bezeichnend sind, ausgewählt ist;
- Durchführen einer nachfolgenden Aufgabe aus einem nachfolgenden Satz von Aufgaben, wobei die nachfolgende Aufgabe auf Grundlage einer Ausgabe, die durch Durchführen einer vorangehenden Aufgabe erzeugt wird, und der Informationen, die für den mindestens einen Kontext, in dem das Netzwerk arbeitet, bezeichnend sind, ausgewählt ist, wobei der Netzwerkverwaltungssystemknoten (300) ferner betreibbar ist, um den Vorgang des Durchführens der nachfolgenden Aufgabe zu wiederholen, bis eine Aufgabe aus einem letzten Satz von Aufgaben ausgewählt und durchgeführt ist;
- Erzeugen eines Handlungsereignisses, wobei das Handlungsereignis durch Durchführen der aus dem letzten Satz von Aufgaben ausgewählten Aufgabe erzeugt wird; und
- Weiterleiten des Handlungsereignisses zur Ausführung.

6. Netzwerkverwaltungssystemknoten (300) nach Anspruch 5, wobei der Netzwerkverwaltungssystemknoten (300) ferner betreibbar ist, um Informationen, die für einen abgehenden Kontext, der dem Handlungsereignis zugeordnet ist, bezeichnend sind, durch Durchführen der aus dem letzten Satz von Aufgaben ausgewählten Aufgabe zu erzeugen und die Informationen, die für den abgehenden Kontext bezeichnend sind, weiterzuleiten.

7. Netzwerkverwaltungssystemknoten (300) nach einem der Ansprüche 5 oder 6, wobei die Informationen, die für den mindestens einen Kontext, in dem das Netzwerk arbeitet, bezeichnend sind, Informationen umfassen, die für einen globalen Kontext, einen Richtlinienkontext oder einen eingehenden Kontext bezeichnend sind.

**8.** Netzwerkverwaltungssystemknoten (300) nach Anspruch 7, wobei die Informationen, die für den eingehenden Kontext bezeichnend sind, Informationen umfassen, die für einen Grund des Auslöserereignisses bezeichnend sind.

**9.** Netzwerkverwaltungssystemknoten (300) nach Anspruch 8, wobei die Informationen, die für den eingehenden Kontext bezeichnend sind, mindestens eines von einer Anzahl von Verkehrsvolumenzunahme verbundener Benutzer, einer Zunahme von abgebrochenen Anrufen, einer Abnahme der Dienstqualität und einer Zunahme der Bitfehlerrate umfassen.

**10.** Netzwerkverwaltungssystemknoten (300) nach Anspruch 7, wobei die Informationen, die für den globalen Kontext bezeichnend sind, Informationen umfassen, die eine Umgebung, in der mindestens ein Teil des Netzwerks arbeitet, beschreiben.

**11.** Netzwerkverwaltungssystemknoten (300) nach Anspruch 7, wobei die Informationen, die für den Richtlinienkontext bezeichnend sind, Informationen umfassen, die beschreiben, wie das Auslöserereignis in Abhängigkeit von mindestens einem von dem globalen Kontext und dem eingehenden Kontext behandelt werden soll.

**12.** Netzwerkverwaltungssystemknoten (300) nach Anspruch 6, wobei die Informationen, die für den abgehenden Kontext bezeichnend sind, Informationen umfassen, die eine Richtlinienlogik identifizieren, die eine Erzeugung des Handlungsereignisses verursacht hat.

**13.** Netzwerkverwaltungssystemknoten (300) nach einem der Ansprüche 5-12, wobei ein einzelnes Auslöserereignis als eine Eingabe in mehr als einer adaptiven Richtlinie verwendet wird.

**14.** Netzwerkverwaltungssystemknoten (300) nach Anspruch 7, wobei sich die Informationen, die für mindestens einen von dem globalen Kontext und dem Richtlinienkontext bezeichnend sind, in Echtzeit ändern.

**15.** Kommunikationsnetzwerk, umfassend einen Netzwerkverwaltungssystemknoten (300) wie nach einem der Ansprüche 5-14 definiert.

**Revendications**

**1.** Procédé de gestion de réseau au moyen d'une politique adaptative, dans lequel la politique adaptative est définie par une pluralité d'ensembles de tâches, le procédé comprenant :

- la réception (102) d'un événement déclencheur ;
- l'obtention (104) d'informations représentant au moins un contexte dans lequel le réseau fonctionne ;
- l'exécution (106) d'une première tâche d'un premier ensemble de tâches, dans lequel la première tâche est sélectionnée sur la base de l'événement déclencheur et des informations représentant l'au moins un contexte dans lequel le réseau fonctionne ;
- l'exécution d'une tâche ultérieure d'un ensemble ultérieur de tâches, dans lequel la tâche ultérieure est sélectionnée sur la base d'une sortie produite par l'exécution d'une tâche précédente et des informations représentant l'au moins un contexte dans lequel le réseau fonctionne, et dans lequel l'action d'exécuter la tâche ultérieure est répétée jusqu'à la sélection et l'exécution d'une tâche d'un ensemble final de tâches ;
- la production (108, 110) d'un événement d'action, dans lequel l'événement d'action est produit en exécutant la tâche sélectionnée de l'ensemble final de tâches ; et
- la transmission (108, 112) pour exécution, de l'événement d'action.

**2.** Procédé selon la revendication 1, comprenant en outre la production (208) d'informations représentant un contexte sortant associé à l'événement d'action en exécutant la tâche sélectionnée de l'ensemble final de tâches et en transmettant les informations représentant le contexte sortant.

**3.** Procédé selon l'une quelconque des revendications précédentes, dans lequel les informations représentant l'au moins un contexte dans lequel le réseau fonctionne comprennent des informations représentant un contexte global, un contexte de politique ou un contexte entrant.

**4.** Procédé selon la revendication 2, dans lequel les informations représentant le contexte sortant comprennent des informations identifiant une logique de politique qui a provoqué la production de l'événement d'action.

5. Nœud de système de gestion de réseau (300) comprenant un processeur (302) et une mémoire (304), ladite mémoire (304) contenant des instructions pouvant être exécutées par ledit processeur (302), ledit nœud de système de gestion de réseau (300) est opérationnel pour utiliser une politique adaptative, dans lequel la politique adaptative est définie par une pluralité d'ensembles de tâches, moyennant quoi ledit nœud de système de gestion de réseau (300) est en outre opérationnel pour :

- recevoir un événement déclencheur ;
- obtenir des informations représentant au moins un contexte dans lequel le réseau fonctionne ;
- exécuter une première tâche d'un premier ensemble de tâches, dans lequel la première tâche est sélectionnée sur la base de l'événement déclencheur et des informations représentant l'au moins un contexte dans lequel le réseau fonctionne ;
- exécuter une tâche ultérieure d'un ensemble ultérieur de tâches, dans lequel la tâche ultérieure est sélectionnée sur la base d'une sortie produite en exécutant une tâche précédente et les informations représentant l'au moins un contexte dans lequel le réseau fonctionne ; ledit nœud de système de gestion de réseau (300) est en outre opérationnel pour répéter l'action d'exécution de la tâche ultérieure jusqu'à la sélection et l'exécution d'une tâche d'un ensemble final de tâches ;
- produire un événement d'action, dans lequel l'événement d'action est produit en exécutant la tâche sélectionnée de l'ensemble final de tâches ; et
- transmettre, pour exécution, l'événement d'action.

6. Nœud de système de gestion de réseau (300) selon la revendication 5, dans lequel ledit nœud de système de gestion de réseau (300) est en outre opérationnel pour produire des informations représentant un contexte sortant associé à l'événement d'action en exécutant la tâche sélectionnée de l'ensemble final de tâches et pour transmettre les informations représentant le contexte sortant.

7. Nœud de système de gestion de réseau (300) selon l'une quelconque des revendications 5 ou 6, dans lequel les informations représentant l'au moins un contexte dans lequel le réseau fonctionne comprennent des informations représentant un contexte global, un contexte de politique ou un contexte entrant.

8. Nœud de système de gestion de réseau (300) selon la revendication 7, dans lequel les informations représentant le contexte entrant comprennent des informations indiquant la raison de l'événement déclencheur.

9. Nœud de système de gestion de réseau (300) selon la revendication 8, dans lequel les informations représentant le contexte entrant comprennent au moins l'une d'une augmentation de volume de trafic d'un certain nombre d'utilisateurs attachés, d'une augmentation d'appels interrompus, d'une diminution de la qualité de service et d'une augmentation du taux d'erreur de bit.

10. Nœud de système de gestion de réseau (300) selon la revendication 7, dans lequel les informations représentant le contexte global comprennent des informations décrivant un environnement dans lequel au moins une partie du réseau fonctionne.

11. Nœud de système de gestion de réseau (300) selon la revendication 7, dans lequel les informations représentant le contexte de politique comprennent des informations décrivant comment l'événement déclencheur doit être traité en fonction d'au moins l'un du contexte global et du contexte entrant.

12. Nœud de système de gestion de réseau (300) selon la revendication 6, dans lequel les informations représentant le contexte sortant comprennent des informations identifiant une logique de politique qui a provoqué la production de l'événement d'action.

13. Nœud de système de gestion de réseau (300) selon l'une quelconque des revendications 5 à 12, dans lequel un seul événement déclencheur est utilisé en tant qu'entrée dans plusieurs politiques adaptatives.

14. Nœud de système de gestion de réseau (300) selon la revendication 7, dans lequel les informations représentant au moins l'un du contexte global et du contexte de politique changent en temps réel.

15. Réseau de communication comprenant un nœud de système de gestion de réseau (300) tel que défini selon l'une quelconque des revendications 5 à 14.

Trigger Event received — 102

Context information received — 104

Perform task from next set of tasks — 106

Performed task from the last set of tasks? — 202

No

Yes

Produce and forward Action Event — 108

**Fig. 1A**

108

Produce Action Event — 110

Forward Action Event — 112

**Fig. 1B**

Trigger Event received

— 102

Context information received

— 104

Perform task from next
set of tasks

— 106

Performed
task from
the last set
of tasks?

No

— 202

Yes

Produce and forward Action Event
and associated context information

— 208

*Fig. 2*

memory

304

processor

302

306

IF

300

network

*Fig. 3*

410

412

Business Goals
changing in
Real Time

Domain Goals
changing in
Real Time

404

402

406

Triggering
Systems

Adaptive Policy Execution (APEX)

Actioning
Systems

Adaptive Policy

Trigger
Events with
Incoming
Context

Context from
other Sources
in Real Time

Action
Events with
Outgoing
Context

416

408

418

414

*Fig. 4*

**Fig. 5**

**Fig. 6**

## Active States

Inactive ← Match → Establish → Decide → Act

702    502    504    506    508

704

**Fig. 7**

Adaptive Policy

416    502    802    504    506    804    418    508

Trigger Event with Incoming Context

$C_{im}$

**Match**
Task Selection Logic
Task
Task Parameters
Task Logic

$C_{ie}$
$C_{om}$

**Establish**
Task Selection Logic
Task
Task Parameters
Task Logic

$C_{id}$
$C_{oe}$

**Decide**
Task Selection Logic
Task
Task Parameters
Task Logic

$C_{od}$
$C_{ia}$

**Act**
Task Selection Logic
Task
Task Parameters
Task Logic

$C_{oa}$

Action Event with Outgoing Context

Policy Context $C_p$

Global Context $C_g$

806
808
814
816
408
810
812

**Fig. 8**

Set Active State to "Match" — 902

Wait for Trigger Event
with Context $C_i$ — 904

Pass Event with Context $C_i$ to
Current Active State Returning
Event with Context $C_o$ — 906

State Executed
Successfully? — 908

No

Yes

Is Current Active
State "Act"? — 910

No

912

Increment Active State to
next Active State

Yes

Forward Event as Action
Event with Context $C_o$ — 916

Set Event Incoming Context
$C_i$ to Outgoing Context $C_o$ — 914

**Fig. 9**

Pass Event with Context $C_i$ to
Current Active State Returing
Event with Context $C_o$ — 906

Use Task Selection Logic to Select Task from Current Task Set using
Incoming Context $C_i$, Policy Context $C_p$ and Global Context $C_g$ — 1002

Execute Task Logic using Task Parameters, Incoming
Context $C_i$, Policy Context $C_p$ and Global Context $C_g$ — 1004

Update Outgoing Context $C_o$, Policy
Context $C_p$ and Global Context $C_g$ — 1006

Return

**Fig. 10**

```
●
│
┌─────────────────────────────────────┐
│ Create and Assign Unique Task Id     │
└─────────────────────────────────────┘
                 │
┌──────────────────────────────────────────────┐
│ Specify Task Type as Match, Establish, Decide or Act │
└──────────────────────────────────────────────┘
                 │
┌─────────────────────────────────────┐
│ Specify Incoming Events of the Task  │
└─────────────────────────────────────┘
                 │
┌─────────────────────────────────────┐
│ Specify Outgoing Events of the Task  │
└─────────────────────────────────────┘
                 │
┌─────────────────────────────────────┐
│ Specify Description of the Task      │
└─────────────────────────────────────┘
                 │
┌─────────────────────────────────────┐
│ Specify Parameters of the Task       │
└─────────────────────────────────────┘
                 │
┌───────────────────────────────────────────────────────────────┐
│ Specify Incoming Context Attributes Used from Incoming Context Metadata │
└───────────────────────────────────────────────────────────────┘
                 │
┌─────────────────────────────────────────────────────────────────┐
│ Specify Outgoing Context Attributes Modified in Outgoing Context Metadata │
└─────────────────────────────────────────────────────────────────┘
                 │
┌──────────────────────────────────────────────────────────────────┐
│ Specify Policy Context Attributes Used and Modified from Policy Context Metadata │
└──────────────────────────────────────────────────────────────────┘
                 │
┌──────────────────────────────────────────────────────────────────┐
│ Specify Global Context Attributes Used and Modified from Global Context Metadata │
└──────────────────────────────────────────────────────────────────┘
                 │
┌─────────────────────────────────────┐
│ Specify Task Logic                   │
└─────────────────────────────────────┘
                 │
┌─────────────────────────────────────┐
│ Store Task in Task Repository        │
└─────────────────────────────────────┘
                 │
                 ◉
```

## *Fig. 11*

**Task Definition**

| Task Definition | |
|---|---|
| Task ID | — 1202 |
| Task Description | — 1204 |
| Task Type: {M, E, D, A} | — 1206 |
| Incoming Events | — 1208 |
| Outgoing Events | — 1210 |
| Task Parameters | — 1212 |
| Used Incoming Context $C_i$ | — 1214 |
| Modified Outgoing Context $C_o$ | — 1216 |
| Used Policy Context $C_p$ | — 1218 |
| Modified Policy Context $C_p$ | — 1220 |
| Used Global Context $C_g$ | — 1222 |
| Modified Global Context $C_g$ | — 1224 |
| Task Logic | — 1226 |

## *Fig. 12*

Create and Assign Unique Policy Id — 1302

Specify Description of Policy — 1304

Deduce Incoming Trigger Events from Match Tasks — 1306

Deduce Outgoing Action Events from Act Tasks — 1308

Specify Active State: Match — 1310

Specify Active State: Establish — 1312

Specify Active State: Decide — 1314

Specify Active State: Act — 1316

1318 — Deduce Incoming Context Attributes Used from Active State Tasks

1320 — Deduce Outgoing Context Attributes Modified from Active State Tasks

1322 — Deduce Policy Context Attributes Used and Modified from Active State Tasks

1324 — Deduce Global Context Attributes Used and Modified from Active State Tasks

1326 — Store Policy in Policy Repository

**Fig. 13**

Policy Definition

| Policy ID | 1402 |
| Description | 1404 |
| Triggering Events | 1406 |
| Action Events | 1408 |
| Match: Active State Definition | 1410 |
| Establish: Active State Definition | 1412 |
| Decide: Active State Definition | 1414 |
| Act: Active State Definition | 1416 |
| Used Incoming Context $C_i$ | 1418 |
| Modified Outgoing Context $C_o$ | 1420 |
| Used Policy Context $C_p$ | 1422 |
| Modified Policy Context $C_p$ | 1424 |
| Used Global Context $C_g$ | 1426 |
| Modified Global Context $C_g$ | 1428 |

**Fig. 14**

Specify Active State

1502

Select Next Task from Task Repository

1504

More Tasks in Active
State Definition?          Yes

1506

No

Set Task Count

1508

Specify Task Selection Logic

1510

Return

*Fig. 15*

Active State Definition

Task Selection Logic          1602

Task Count: {1 to n}          1604

Task 1 Definition

Task 2 Definition          1606

:::::::::::

Task n Definition

*Fig. 16*

Deployment Preparation

1702

Deployment Preparation
Successful?          No

1704

Yes

Deployment Execution

1706

*Fig. 17*

Deployment Preparation — 1702

Prepare List of Policy Instances to be Deployed and Removed — 1802

Set Task Parameters in Tasks in Policy — 1804

Read Policy Definitions from Policy Repository — 1806

Get List of Running Policy Instances from Adaptive Policy Engine — 1808

Create List of New Policy Instances to be Created in Adaptive Policy Engine — 1810

Create List of Policy Instances to be Modified in Adaptive Policy Engine — 1812

Create List of Policy Instances to be Deleted in Adaptive Policy Engine — 1814

Deduce Changes to Global Context Attributes Used and Modified from Change in Policy Instances in Adaptive Policy Engine — 1816

Check Consistency of Incoming Policy Instance Set against Running Policy Instance Set — 1818

Policy Instance Set Consistent?   No

1820

Yes

Return OK      Return Fail

*Fig. 18*

Deployment Execution ──── 1706

Order Termination of all Modified and Deleted Policies in Adaptive Policy Engine ──── 1902

Order Temination of all Policies affected by changes in Global Context in Adaptive Policy Engine ──── 1904

Update Global Context with Deduced Changes ──── 1906

Order Creation of New Policy Instances in Adaptive Policy Engine ──── 1908

Order Modification of Modified Portion of Modified Policy Instances in Adaptive Policy Engine ──── 1910

Order Deletion of Deleted Policy Instances in Adaptive Policy Engine ──── 1912

Restart all Affected Policy Instance in Adaptive Policy Engine ──── 1914

Return

**Fig. 19**

Deduce Global Context Required and Policy Context Required by each Policy Instance running in Adaptive Policy Engine ──── 2002

Group Required Context by Context Source ──── 2004

More Context Sources to Process? ──── 2006    Yes

No

Order Collection of Context from Context Collector for Context Source ──── 2008

**Fig. 20**

**Fig. 21**

Rx 2202

Task execution unit 2206

interface 2204

Tx 2208

2200

*Fig. 22*

Rx 2202

2302 2304 Task execution unit 2306 2308

Match | Establish | Decide | Act

2206

interface 2204

Tx 2208

2200

*Fig. 23*

2406

2404

2408

2402

2410

2412

2400

300, 2200

*Fig. 24*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006048142 A1
- US 7996353 B

### Non-patent literature cited in the description

- **BELL, D.E. ; LAPADULA, L.J.** Secure Computer Systems: Mathematical Foundations. *DTIC Document, no. MITRE Technical Report,* March 1973, vol. 2547
- **COULOURIS, G. ; DOLLIMORE, J. ; KINDBERG, T. ; BLAIR, G.** Distributed Systems: Concepts and Design. Addison-Wesley, 2012
- **DOBSON, J.E. ; MCDERMID, J.A.** A Framework for Expressing Models of Security Policy. *Security and Privacy, 1989. Proceedings., 1989 IEEE Symposium on,* May 1989, 229-239
- **JOMIER, G.** A Mathematical Model for the Comparison of Static and Dynamic Memory Allocation in a Paged System. *IEEE Trans. Software Eng.,* July 1981, vol. 7 (4), 375-385
- A Drop and Throttle Flow Control Policy for Computer Networks. **KAMOUN, F.** Communications, IEEE Transactions on. IEEE, 1981, vol. 29, 444-452
- **LEVIN, R. ; COHEN, E. ; CORWIN, W. ; POLLACK, F. ; WULF, W.** Policy/Mechanism Separation in Hydra. *ACM SIGOPS Operating Systems Review,* 1975, vol. 9 (5), 132-140
- Specifying Discretionary Access Control Policy for Distributed Systems. **MOFFETT, J. ; SLOMAN, M. ; TWIDLE, K.** Computer Communications. Elsevier, November 1990, vol. 13, 571-580
- **MOFFETT, J.D ; SLOMAN, M.S.** The Representation of Policies as System Objects. *ACM SIGOIS Bulletin,* 1991, vol. 12 (2-3), 171-184
- Policy Hierarchies for Distributed Systems Management. **MOFFETT, J.D ; SLOMAN, M.S.** Selected Areas in Communications, IEEE Journal on. IEEE, 1993, vol. 11, 1404-1414
- Policy Conflict Analysis in Distributed System Management. **MOFFETT, J.D. ; SLOMAN, M.S.** Journal of Organizational Computing and Electronic Commerce. Taylor and Francis, 1994, vol. 4, 1-22
- A Model-Based Approach to Policy Analysis in Library Networks. **ROUSE, W.B. ; ROUSE, S.H.** Systems, Man and Cybernetics, IEEE Transactions on. IEEE, September 1979, vol. 9, 486-494
- **SLOMAN, M.** Management for Open Distributed Processing. *Distributed Computing Systems, 1990. Proceedings., Second IEEE Workshop on Future Trends of,* September 1990, 533-539
- Policy Driven Management for Distributed Systems. **SLOMAN, M.** Journal of network and Systems Management. Springer, 1994, vol. 2, 333-360